(19) Europäisches Patentamt
European Patent Office
Office européen des brevets

(11) **EP 2 833 100 B1**

(12) **EUROPÄISCHE PATENTSCHRIFT**

(45) Veröffentlichungstag und Bekanntmachung des Hinweises auf die Patenterteilung:
**01.02.2017  Patentblatt 2017/05**

(51) Int Cl.:
***G01D 5/22*** *(2006.01)*

(21) Anmeldenummer: **14179527.8**

(22) Anmeldetag: **01.08.2014**

(54) **Sensor zum Anzeigen einer Position oder einer Positionsänderung eines Kopplungselementes und Verfahren zum Betrieb des Sensors**

Sensor for displaying a position or a change of position of a coupling element and method of operating the sensor

Capteur destiné à afficher une position ou une modification de position d'un éléments de couplage et procédé de fonctionnement du capteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2013  EP 13179115**
**18.11.2013  DE 102013019168**

(43) Veröffentlichungstag der Anmeldung:
**04.02.2015  Patentblatt 2015/06**

(73) Patentinhaber: **Hahn-Schickard-Gesellschaft für angewandte**
**Forschung e.V.**
**78052 Villingen-Schwenningen (DE)**

(72) Erfinder:
• **Bülau, André**
**70193 Stuttgart (DE)**

• **Fritz, Karl-Peter**
**71088 Holzgerlingen (DE)**
• **Wolter, Frank**
**71229 Leonberg (DE)**

(74) Vertreter: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
**EP-A1- 1 164 358     EP-A2- 0 446 969**
**EP-A2- 1 054 238     US-B1- 6 552 666**

**EP 2 833 100 B1**

**Beschreibung**

Die Erfindung bezieht sich auf einen Sensor mit einer Primärspule und zwei Sekundärspulen, deren Ausgangssignale von einer Position eines Kopplungselementes abhängig sind. Die Erfindung bezieht sich ferner auf ein Verfahren zum Betrieb eines solchen Sensors. Das Funktionsprinzip induktiver Sensoren, die nach dem Linear Variabler Differenzial Transformator (LVDT)-Prinzip arbeiten, beruht auf der Kopplung zwischen einer Primärspule und zwei Sekundärspulen durch ein Kopplungselement, siehe z.B. US6552666. Eine Verschiebung des Kopplungselementes hat einen Einfluss auf die in den Sekundärspulen induzierten Spannungen, sodass anhand der Spannungen an den Sekundärspulen ein Rückschluss auf die Position des Kopplungselementes möglich ist.

Die Primärspule wird dazu mit einem Erregersignal bzw. Primärsignal mit einer Anregungsfrequenz angesteuert. An den beiden Sekundärspulen kann das induzierte Signal abgegriffen werden. Bei einer symmetrischen Anordnung von Primär- und Sekundärspulen kann das durch das Primärsignal in den beiden Sekundärspulen induzierte Sekundärsignal bei einer Abwesenheit eines Kopplungselementes gleich groß sein. Bei einem Vorhandensein des Kopplungselementes existiert eine Position desselben, an der die Kopplung zwischen der Primärspule und den beiden Sekundärspulen gleich ist, sodass die beiden Sekundärsignale ebenfalls gleich sind. Bei einer Verschiebung des Kopplungselementes aus dieser Position ändern sich die Sekundärsignale gegenläufig zueinander, sodass ein von der Verschiebung abhängiges Differenzsignal gewonnen werden kann. Mit sogenannten Amplitudenmodulationsverfahren, wie Zweiweg-Gleichrichtung, separate Zweiweg-Gleichrichtung mit Differenzbildung oder Synchrondemodulation, kann das Differenzsignal ausgewertet werden.

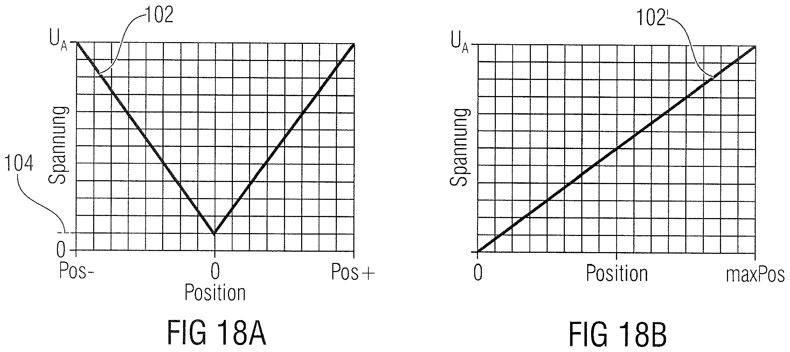

Bei der Zweiweg-Gleichrichtung, wie sie beispielsweise in LVDT Positionssensoren der Firma ASM Automation Sensorik Messtechnik GmbH erfolgen kann, sind die beiden Sekundärspulen gegenphasig verschaltet. Das demodulierte Ausgangssignal kann eine typische V-Form aufweisen, wie es beispielsweise in der Fig. 18a dargestellt ist. Eine Amplitude der Ausgangsspannung kann bei einem verschobenen Kopplungselement auf zwei voneinander verschiedene Positionen hindeuten. In anderen Worten schafft die Zweiweg-Gleichrichtung eine Problematik der fehlenden Eindeutigkeit des Messsignals. Es kann möglicherweise ohne weitere Hilfsmittel oder weitere Auswertungen nicht erkannt werden, ob sich das Kopplungselement auf der einen oder der anderen Seite der Nullposition befindet. Des Weiteren ist das demodulierte Ausgangssignal im Ursprung nichtlinear und kann einen Offset aufweisen, der dazu führen kann, dass das Sensorsignal auch in der Symmetrieposition des Kopplungselementes einen Wert ungleich Null aufweist. Als Grund hierfür werden in der Literatur unter anderem Flussverluste im LVDT genannt.

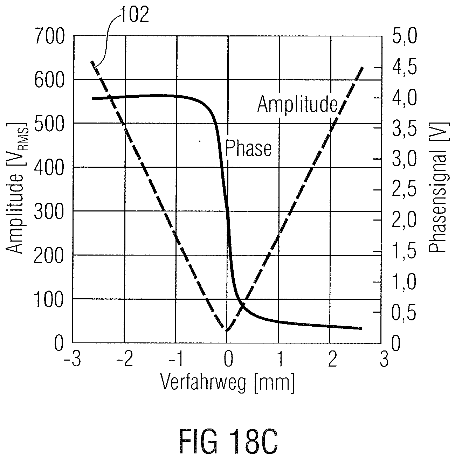

Um das Messsignal eindeutig zu machen, kann beispielsweise eine separate Zweiweg-Gleichrichtung vorgenommen werden, bei der zunächst jedes der Sekundärsignale einzeln demoduliert wird und anschließend eine Differenz gebildet wird, sodass eine eindeutige Kennlinie darstellbar ist, wie sie bspw. in der Fig. 18b dargestellt ist. Alternativ dazu kann eine Zweiweg-Gleichrichtung mit einer Phasendetektion verknüpft werden, sodass eine Fallunterscheidung für den linken und rechten Ast der V-förmigen Sensorsignalkurve möglich ist, wie es beispielhaft in der Fig. 18c dargestellt ist.

Sowohl die Zweiweg-Gleichrichtung als auch die separate Zweiweg-Gleichrichtung und die Synchrondemodulation, wie sie beispielsweise gemäß der Applikationsschrift SPRA 946 der Firma Texas Instruments umgesetzt sein kann, führt zu zusätzlichem Schaltungsaufwand, der mitunter teure Elektronik erforderlich machen kann.

Eine Auswertung der Signalamplituden kann auch über eine Effektivwert-zu-Gleichstrom-Konversion (RMS-to-DC-Conversion), wie beispielsweise in der Design Note 362 der Firma Linear Technology beschrieben sind, erfolgen.

Integrierte Bausteine, die mehrere dieser Funktionen kombinieren, sind beispielsweise die Bausteine AD598 oder AD698 der Firma Analog Devices.

Bei einer Auswertung der Sensorsignale kann eine Digitalisierung der Signale an den Sekundärspulen beispielsweise durch einen Analog-Digital-Wandler (Analog-DigitalConverter - ADC) erfolgen.

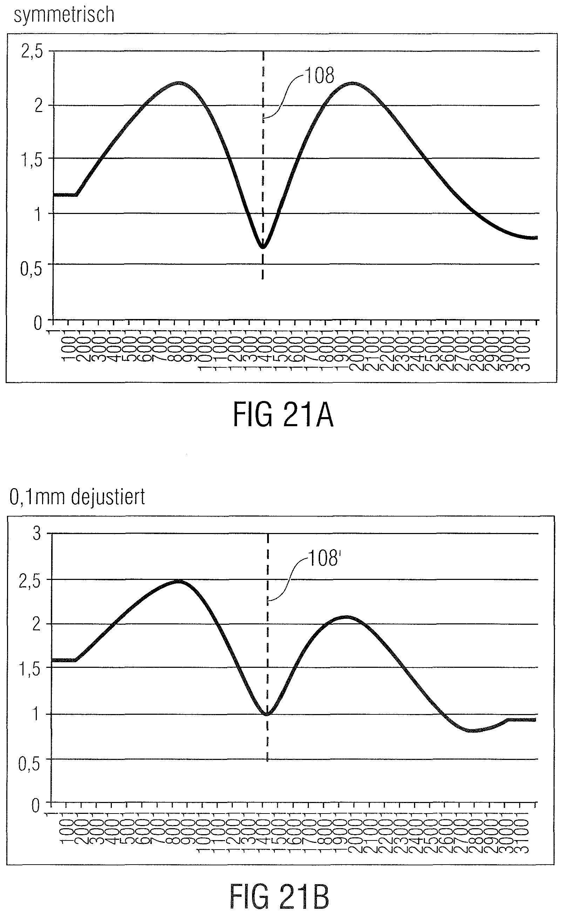

Der Amplitudengang von LVDT-Sensoren kann bei Anwesenheit von externen Magnetfeldern oder von ferromagnetischen Materialien starke Verzerrungen aufweisen, wie es beispielsweise in den Fig. 21a-d dargestellt ist. Das führt dazu, dass in vielen Messanordnungen, bei den beispielsweise der Sensor in einem Metallgehäuse untergebracht sein soll oder bei denen starke Magnetfelder wirken, wie etwa in Elektromotoren, Sensoren nach dem LVDT-Prinzip ungeeignet sein können.

Wünschenswert wäre demnach eine Vorrichtung und ein Verfahren, um eine Position eines Elementes eindeutig und unabhängig von äußeren Magnetfeldern messen zu können.

Die Aufgabe der vorliegenden Erfindung besteht darin, Sensoren und Verfahren zum Betrieb derselben zu schaffen, die einen reduzierten Raumbedarf aufweisen und eine robustere und zuverlässigere Positionserkennung von beweglichen Objekten schaffen.

Diese Aufgabe wird durch den Gegenstand der unabhängigen Patentansprüche gelöst.

Der Kerngedanke der vorliegenden Erfindung besteht darin erkannt zu haben, dass eine Position oder eine Positionsänderung des Kopplungselementes, basierend auf einem Phasenversatz zwischen den Ausgangssignalen einer ersten Sekundärspule und einer zweiten Sekundärspule, erhalten werden kann.

Ein Ausführungsbeispiel der vorliegenden Erfindung zeigt einen Sensor mit einer Primärspule und zwei Sekundärspulen. An der Primärspule ist ein Erregersignal anlegbar. In jeder Sekundärspule ist ein von einer Position des Kopplungselementes abhängiges Ausgangssignal induzierbar. Eine Auswerteeinrichtung des Ausführungsbeispiels ist ausgebildet, um die Ausgangssignale der Sekundärspulen auszuwerten. Die Auswertung umfasst das Auswerten eines Phasenversatzes zwischen den Ausgangssignalen, sodass ein Sensorausgangssignal des Sensors die Position oder eine Positionsänderung des Kopplungselementes basierend auf dem Phasenversatz anzeigt.

Vorteilhaft an dieser Ausführungsform ist, dass ein Phasenversatz zwischen den Ausgangssignalen der Sekundärspulen eindeutig und/oder robust gegenüber äußeren Störeinflüssen, wie etwa Magnetfeldern, sein kann und ein zuverlässiger Betrieb des Sensors auch in Umgebungen mit starken externen Magnetfeldern ermöglicht wird.

Ein weiteres Ausführungsbeispiel der vorliegenden Erfindung zeigt eine Vorrichtung, die einen Sensor mit einer Primärspule, zwei Sekundärspulen und eine Auswerteeinrichtung zum Auswerten der Ausgangssignale und zum Liefern des Phasenversatzes zwischen den Ausgangssignalen umfasst. Das Kopplungselement ist mit einem beweglichen Element der Vorrichtung verbunden, sodass ein Betrieb des Sensors eine Positionsbestimmung oder eine Bestimmung einer Positionsänderung des beweglichen Elementes ermöglicht.

Ein weiteres Ausführungsbeispiel der vorliegenden Erfindung umfasst ein Verfahren zum Betreiben eines erfindungsgemäßen Sensors. Das Verfahren umfasst ein Anlegen eines Erregersignals an die Primärspule und ein Induzieren eines von einer Position des Kopplungselementes abhängigen Ausgangssignals in jeder Sekundärspule. Ferner umfasst das Verfahren ein Auswerten der Ausgangssignale der Sekundärspulen basierend auf einem Phasenversatz zwischen den Ausgangssignalen und ein Liefern eines Sensorausgangssignals, welches die Position oder eine Positionsänderung des Kopplungselementes anzeigt.

Weitere vorteilhafte Ausführungsformen sind der Gegenstand der abhängigen Patentansprüche.

Bevorzugte Ausführungsbeispiele der vorliegenden Erfindung werden nachfolgend, Bezug nehmend auf die beiliegenden Zeichnungen, erläutert. Es zeigen:

Fig. 1   ein schematisches Blockschaltbild eines Sensors, der eine Primärspule und zwei Sekundärspulen umfasst;

Fig. 2   ein schematisches Blockschaltbild eines Sensors, bei dem eine Auswerteein-richtung zwei Verstärkereinrichtungen und einen Zeit-zu-Digital-Umsetzer umfasst;

Fig. 3   ein schematisches Blockschaltbild eines Sensors mit einer Auswerteeinrichtung, die eine Berechnungseinrichtung mit einen Phasendetektor und einen Quotientenbestimmer aufweist;

Fig. 4   ein schematisches Blockschaltbild eines Sensors, der eine Auswerteeinrichtung mit zwei Signalumformern und einem Multiplizierer 48 umfasst;

Fig. 5   eine schematische Gegenüberstellung der zwei umgeformten Signale aus Fig. 4 zur Verdeutlichung des Informationsgehaltes des Gleichanteils eines Multiplikationssignals;

Fig. 6   eine schematische Darstellung eines Sensors mit einer Auswerteeinrichtung die ausgebildet ist, um einen zeitlichen Versatz zwischen einem Ausgangssignal und einem Erregersignal zu bestimmen;

Fig. 7   eine schematische Draufsicht auf eine Spulenanordnung, bei der die Primärspule und die Sekundärspulen als planare Spulen auf einem flexiblen Substrat 58 ausgeführt sind;

Fig. 8   die Spulenanordnung aus Fig. 7, die beispielhaft zu einer räumlichen Anordnung gebogen ist;

Fig. 9   ein schematisches Blockschaltbild einer Vorrichtung mit einem beweglichen Element das mit dem Kopplungselement eines Sensors verbunden ist;

Fig. 10a   ein experimentelles Setup mit einer Kolbenpumpe, die ein Pumpengehäuse aufweist;

Fig. 10b   eine Detailansicht auf ein Trägerbauteil aus Fig. 10a, an dem die Spulenanordnung angeordnet ist;

Fig. 10c   eine Detailansicht auf den Ausschnitt des Setups aus Fig. 10b, bei der das Pumpengehäuse von dem Trägerbauteil umschlossen ist;

Fig. 11   die Planarspulenanordnung in einer unmittelbaren Nähe zu einem elektromagnetischen Antrieb ;

Fig. 12    eine photographische Darstellung einer beispielhaften Auswerteeinrichtung;

Fig. 13    einen schematischen Graphen mit einem Phasengang und einem Amplitudengang zwischen den zwei Sekundärspulen, wie sie bspw. mit einem Setup aus Fig. 10a erfasst werden können;

Fig. 14    ein Messwertdiagramm für eine Sensoranordnung bei einer Abwesenheit von magnetischen Elementen;

Fig. 15    eine Darstellung von Messergebnissen an einem Messaufbau analog zu den Ergebnissen in Fig. 14, bei der in einer Umgebung des Sensors ein Elektromagnet angeordnet ist;

Fig. 16    eine Messwertkurve und eine korrespondiere Sollwertkurve, die aus einem Messaufbau, bei einer Anwesenheit eines Permanentmagneten erhalten werden kann;

Fig. 17    eine Sensor-Kennlinie, mit Messwerten basierend auf einer Rauschmessung einer Auswerteelektronik;

Fig. 18a    eine exemplarische und idealisierte Darstellung einer Kennlinie eines klassischen LVDT mit einer Signalamplitudenauswertung mit einer ZweiwegGleichrichtung;

Fig. 18b    eine mögliche Abhilfe einer Mehrdeutigkeit aus Fig. 18a anhand einer idealisierten Kennlinie, wie sie beispielsweise bei einer separaten ZweiwegGleichrichtung einer Amplitudenauswertung erhalten werden kann;

Fig. 18c    die Kennlinie aus Fig. 18a mit einem zusätzlichen Signal eines Phasenkomparators zur Abhilfe einer Mehrdeutigkeit;

Fig. 19a    eine ideale Signal/Verschiebungskurve mit Signalwerten, die basierend auf einer separaten Zweiweg-Gleichrichtung eine Position des Kopplungselementes anzeigen;

Fig. 19b    eine reelle, übertrieben dargestellte und nichtlineare Ausgangskurve, wie sie beispielsweise in der Applikationsschrift SPRA 946 der Firma Texas Instruments abgebildet ist;

Fig. 20    eine Graphik mit einer Messkurve, bei der ein LVDT-Sensor mit einer Amplitudenauswertung einen Kolbenweg anzeigt, bei dem kein Störkörper vorhanden ist;

Fig. 21a    eine unbeeinflusste Messkurve, wie sie in ähnlicher Form beispielhaft in Fig. 20 dargestellt ist, bei dem ein Störkörper symmetrisch zum LVDT einjustiert worden ist;

Fig. 21b    eine resultierende Kurve der Amplitudenauswertung gemäß Fig. 21 a bei einer Dejustage des Störkörpers um 0,1 mm;

Fig. 21c    ein exemplarisches Messergebnis, bei der der Störkörper gegenüber Fig. 21 a um 0,2 mm dejustiert ist;

Fig. 21d    ein exemplarisches Messergebnis, bei der der Störkörper gegenüber Fig. 21a um 0,3 mm dejustiert ist.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, sodass die in unterschiedlichen Ausführungsbeispielen dargestellte Beschreibung dieser Elemente untereinander austauschbar ist bzw. aufeinander angewendet werden kann.

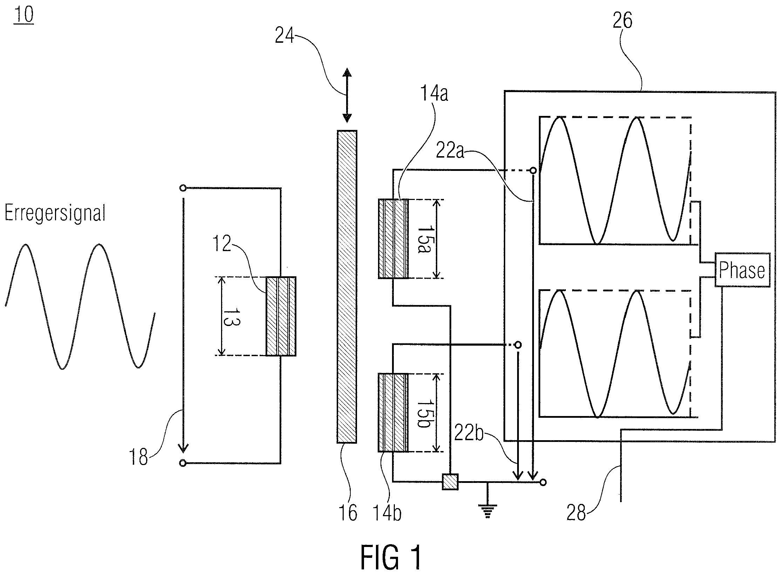

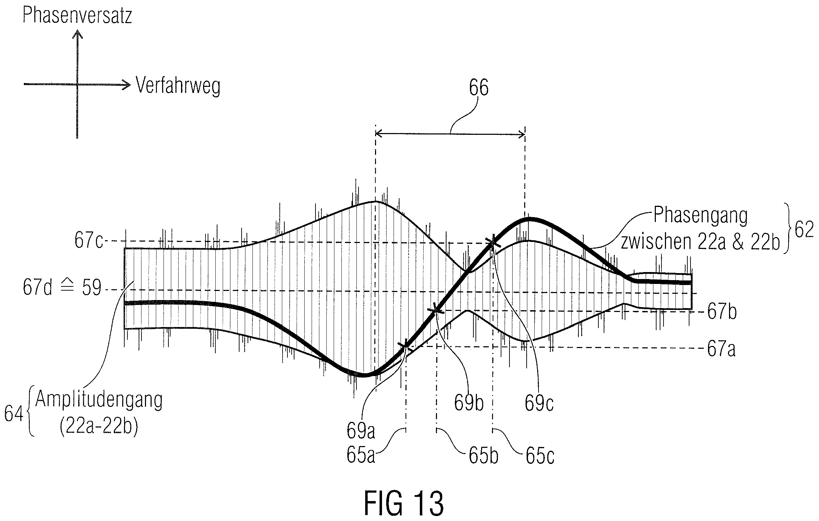

Im Folgenden wird Anhand von Fig. 1 unter Bezugnahme auf die Fig. 13 ein schematisches Blockschaltbild eines Sensors erläutert, der ausgebildet ist, eine Positionsbestimmung eines Kopplungselementes basierend auf einer Phasenverschiebung zweier Ausgangssignale zu ermöglichen. Fig. 13 zeigt eine Gegenüberstellung eines Amplitudenganges und eines Phasenganges der zwei Ausgangssignale.

Fig. 1 zeigt ein schematisches Blockschaltbild eines Sensors 10. Der Sensor 10 umfasst eine Primärspule 12 mit einer Breite 13 und zwei Sekundärspulen 14a und 14b mit einer Breite 15a und 15b. Ein Kopplungselement 16 ist zwischen der Primärspule 12 und den Sekundärspulen 14a und 14b angeordnet. Das Kopplungselement kann Teil des Sensors 10 oder Teil einer anderen Vorrichtung, wie etwa ein Pumpenkolben einer Pumpe, sein, dessen Position oder Positionsänderung von dem Sensor 10 bestimmt oder erfasst werden soll.

An die Primärspule 12 ist ein Erregersignal 18 anlegbar. Ein Magnetfeld, basierend auf dem Strom der durch das Erregersignal 18 durch die Primärspule 12 fließt, kann in die Sekundärspulen 14a und 14b einkoppeln, wobei ein Maß der Einkopplung und mithin eine Amplitude von Ausgangssignalen 22a und 22b der Sekundärspulen 14a und 14b von einer Position des Kopplungselementes 16 abhängig sein kann. Ferner kann eine dynamische Phasenverschiebung zwischen dem Erregersignal 18 und den Ausgangssignalen 22a und 22b von der Position des Kopplungselementes abhängig sein. Eine Phasenverschiebung zwischen dem Erregersignal 18 und den Ausgangssignalen 22a und 22b kann einen statischen oder quasistatischen Anteil und einen dynamischen Anteil umfassen. Der statische oder quasistatische Anteil der Phasenverschiebung kann auf einer Umgebung der Primärspule 12 und/oder der Sekundärspulen 14a und 14b, wie etwa ein metallisches Gehäuse der Spulenanordnung oder externe Magnetfelder, wie das Erdmagnetfeld oder Magnetfelder, die von benachbarten Maschinen, wie bspw. Transformatoren, erzeugt werden. Der dynamische Anteil der Phasenverschiebung kann auf einer Position oder einer Positionsänderung des Kopplungselementes 16 basieren, wenn das Kopplungselement in dem Magnetfeld der Primärspule 12 ist. Eine Frequenz der Ausgangssignale 22a und 22b ist dabei gleich einer Frequenz des Erregersignals 18.

Die Sekundärspule 14a und die Sekundärspule 14b sind mit dem gleichen Bezugspotenzial verbunden, sodass die Ausgangssignale 22a und 22b bezogen auf ein gemeinsames Bezugspotenzial darstellbar sind, sodass eine Vergleichbarkeit der Ausgangssignale 22a und 22b erleichtert ist. Ferner sind die Sekundärspulen 14a und 14b gegenphasig verschaltet, d. h. eine Veränderung der Phasenverschiebung zwischen zwei Zeitpunkten mit einem positiven Vorzeichen, d. h. mit einer zunehmenden Phasenverschiebung, im Ausgangssignal 22a bzw. 22b führt zu einer Veränderung der Phasenverschiebung, mit einem negativen Vorzeichen, d. h. mit einer abnehmenden Phasenverschiebung, in dem Ausgangssignal 22b bzw. 22a. In anderen Worten kann eine Veränderung der Position des Kopplungselementes 16 von einem ersten Zeitpunkt zu einem nachfolgendem Zeitpunkt zu einer ersten Differenz in der Phasenverschiebung zwischen den beiden Zeitpunkten und zwischen dem Erregersignal 18 und dem Ausgangssignal 22a sowie einer zweiten Differenz in der Phasenverschiebung zwischen den beiden Zeitpunkten zwischen dem Erregersignal 18 und dem Ausgangssignal 22b führen. Die erste und die zweite Differenz können betragsmäßig im Wesentlichen identisch sein und ein von einander verschiedenes Vorzeichen aufweisen, sodass eine mathematische Operation wie eine Differenz, eine Summe, eine Multiplikation oder eine Division basierend auf der ersten und der zweiten Differenz zum ersten und zum nachfolgenden Zeitpunkt ein zwischen den Zeitpunkten veränderliches Ergebnis liefert, das auf die Positionsänderung des Kopplungselementes 16 zurückgeführt werden kann.

Das Kopplungselement kann beispielsweise ein metallisches oder ein ferromagnetisches Material sein.

In anderen Worten führt das Erregersignal 18 zu einem von der Primärspule 12 erzeugten Magnetfeld. Veränderungen in einer Amplitude des Erregersignals 18 führen zu einem veränderlichen Magnetfeld um die Primärspule 12 herum. Die Sekundärspulen 14a und 14b können bezüglich der Primärspule 12 symmetrisch angeordnet sein, d.h., dass durch das veränderliche Magnetfeld, welches von der Primärspule 12 generiert wird, bei einer Abwesenheit des Kopplungselementes 16 die Ausgangssignale 22a der Sekundärspule 14a und 22b der Sekundärspule 14b nahezu identisch induziert werden. Beispielsweise kann dies über gleiche oder im Wesentlichen gleiche Induktivitätswerte der Spulen in Verbindung mit gleichen oder im Wesentlichen gleichen Abständen der Sekundärspulen 14a und 14b zu der Primärspule 12 ermöglicht werden. Alternativ können bspw. voneinander verschiedene Induktivitätswerte mit einem voneinander verschiedenen Abstand der Sekundärspulen 14a und 14b zu der Primärspule 12 ausgeglichen werden. Ferner kann auch eine Orientierung einer jeweiligen Sekundärspule 14a oder 14b gegenüber der Primärspule 12 derart erfolgen, dass ein Grad, d. h. Ausmaß, mit welchem ein magnetisches Feld der Primärspule in die jeweilige Sekundärspule 14a oder 14b einkoppelt, voneinander verschiedene Induktivitätswerte oder Abstände kompensiert. Alternativ kann eine asymmetrische Spulenanordnung genutzt werden, um bspw. voneinander verschiedene Amplituden und- oder Amplitudenveränderungen der Ausgangssignale 22a und 22b auszugeben.

Basierend auf der symmetrischen Anordnung der Sekundärspulen 14a und 14b bezüglich der Primärspule 12 können sich die Ausgangssignale 22a und 22b auch bei einer Anwesenheit des Kopplungselementes 16 in einer Mittenposition, d.h. Nulllage, gleichen. Eine Änderung der Position des Kopplungselementes 16, beispielsweise entlang einer Bewegungsrichtung 24 führt zu einer Veränderung der Ausgangssignale 22a und 22b basierend auf einer veränderten Kopplung zwischen der Primärspule 12 und den Sekundärspulen 14a und 14b. Die Änderung der Signale 22a und 22b kann eine Veränderung der Amplitude bzw. eine Änderung der Phasenlage des Ausgangssignals 22a bzw. 22b bezüglich des Erregersignals 18 umfassen.

Der Sensor 10 umfasst eine Auswerteeinrichtung 26, die ausgebildet ist, um die Ausgangssignale 22a und 22b zu empfangen und einen Phasenversatz zwischen den Ausgangssignalen 22a und 22b auszuwerten Die Auswerteeinrichtung 26 ist ferner ausgebildet, um ein Sensorausgangssignal 28 zu liefern, das die Position oder die Änderung der Position des Kopplungselementes 16 anzeigt, beispielsweise indem eine Positionsänderung des Kopplungselementes 16 in Richtung der Sekundärspule 14a oder der Sekundärspule 14b zu einem ansteigenden Phasenversatz zwischen den Ausgangssignalen 22a und 22b und mithin zu einer Änderung des Sensorausgangssignals 28 führt.

Die Phasenverschiebung zwischen den Ausgangssignalen 22a und 22b kann dabei von äußeren Störeinflüssen, wie etwa Magnetfeldern unbeeinflusst sein, während Amplitudenwerte oder Amplitudendifferenzen von des Störeinflüssen beeinträchtigt werden können, wie es bspw. in der Fig. 13 dargestellt ist.

Aus der nicht oder unwesentlich beeinflussten Phasenverschiebung oder -differenz kann auf die Position des Kopplungselementes 16 geschlossen und das Sensorausgangssignal 28 von der Auswerteeinrichtung 26 derart ausgegeben werden, dass ein direkt proportionaler oder indirekt proportionaler Zusammenhang zwischen dem Phasenversatz zwischen den Ausgangssignalen 22a und 22b und dem Sensorausgangssignals 28 besteht, sodass die Position des Kopplungselementes 16 basierend auf dem Sensorausgangssignal 28 bzw. durch alleinige Betrachtung oder Auswertung des Phasenversatzes bestimmbar sein kann.

In anderen Worten kann eine Position oder Positionsänderung bestimmt werden ohne, dass dazu der Amplitundengang noch benötigt würde. Der Phasenversatz kann somit maßgeblich für die Genauigkeit des Sensorausgangssignals verantwortlich sein, sodass also auch ohne Amplitudengang auskommen werden kann bzw. dass man alleine aus der Kenntnis der Phaseninformation die Position des Kopplungselements zumindest so genau bestimmen kann, wie dies bisher basierend auf der Amplitudeninformation zzgl. Phaseninformation zur Fallunterscheidung erfolgt.

Vorteilhaft an diesem Ausführungsbeispiel ist, dass Phasenverschiebungen zwischen dem Erregersignal 18 und den Ausgangssignalen 22a und 22b von einer Anwesenheit externer Magnetfelder oder ferromagnetischer Materialien unbeeinflusst sein können, sodass ein dynamischer Anteil der Phasenverschiebung eine robuste und zuverlässige Positionserkennung des bezüglich der Primärspule 12 und/oder der Sekundärspulen 14a und 14b beweglichen Kopplungselementes 16 erlaubt.

Eine Positionsbestimmung oder eine Bestimmung der Positionsänderung kann bei einer Frequenz des Erregersignals 18, die auf eine Induktivität der Primärspule 12 und/oder der Sekundärspulen 14a und 14 abgestimmt ist, eine hohe Ortsauflösung des Kopplungselementes 16 ermöglichen.

So kann bspw. eine Frequenz von 1 MHz als Erregerfrequenz gewählt werden, sodass eine Induktivität der Spulen bei 1 MHz einer Impedanz von 50 $\Omega$ entspricht. Diese Impedanz kann einen von einem für die Ansteuerung der Primärwicklung, d. h. die Primärspule des Sensors (LVDT) verwendeten Verstärker möglicherweise geeigneten Lastwiderstand darstellen, das bedeutet, dass der Verstärker den benötigten Strom ohne Probleme treiben kann. Mit anderen Worten kann es erforderlich sein, dass der Verstärker in der Lage ist, ausreichend Strom bei einer bestimmten Frequenz liefern zu können, sodass der LVDT nicht als Kurzschluss für den Verstärker wirkt.

Die Ortsauflösung kann durch einen verwendeten TDC und dessen Zeitauflösung vorgegeben sein, wie etwa bei einem Modell GP22, dessen Zeitauflösung 22 ps beträgt. Bei einem Erregersignal von 1 MHz, d. h. einer Zyklusdauer von 1 $\mu$s, die einem Winkelbereich von 360° entspricht, führt dies zu einer Phasenauflösung von ca. 8 m°. Bei einer Frequenz von 1 kHz erhielte man entsprechend ca. 8 $\mu$° Auflösung, würde dafür jedoch einen Sensor (LVDT) mit einer höheren Induktivität benötigen, mit anderen Worten mit mehr Windungen, sodass die Spule nicht als Kurzschluss wirkt.

Zusätzlich ist zu berücksichtigen, dass die Signale durch die Signalvorverarbeitung (bspw. Verstärkung) rauschen können, was die Auflösung reduzieren kann. Die Ortsauflösung des LVDT ist also nicht durch den Sensor selbst sondern durch die Zeitauflösung des TDC zzgl. dem Rauschen der Signalvorverarbeitung limitiert.

Ferner kann eine Phasenauswertung, d.h. eine Bestimmung des Phasenversatzes mit einem geringen Schaltungsaufwand, wie etwa durch eine Verwendung von integrierten Schaltungen (Integrated Circuits - IC) realisiert werden.

Der Sensor 10 kann beispielsweise ausgebildet sein, um die Position eines Kolbens einer Pumpe zu überwachen. Das Kopplungselement 16 kann beispielsweise mit dem Kolben der Pumpe verbunden sein. Alternativ ist ebenfalls vorstellbar, dass der Kolben der Pumpe das Kopplungselement 16 ist, wenn der Kolben bspw. ferromagnetisches Material umfasst.

In unmittelbarer Nähe zum Kopplungselement können Störkörper, wie Permanentmagneten, elektromagnetische Antriebe, metallische oder ferromagnetische Elemente angeordnet sein. Eine Auswertung des Phasengangs kann somit dazu führen, dass der Sensor 10 robust, d.h. unempfindlich gegenüber derartigen Störgrößen ausgeführt sein kann.

In anderen Worten kann der Sensor 10 auch als neuartiger Ansatz zur Auswertung von LVDT-Sensoren oder als eine LVDT-Wegesensorik, d.h. einen Linearvariablen differenziellen Transformator, als Positionssensor in Umgebungen mit Permanentmagneten und ferromagnetischen Materialien bezeichnet werden.

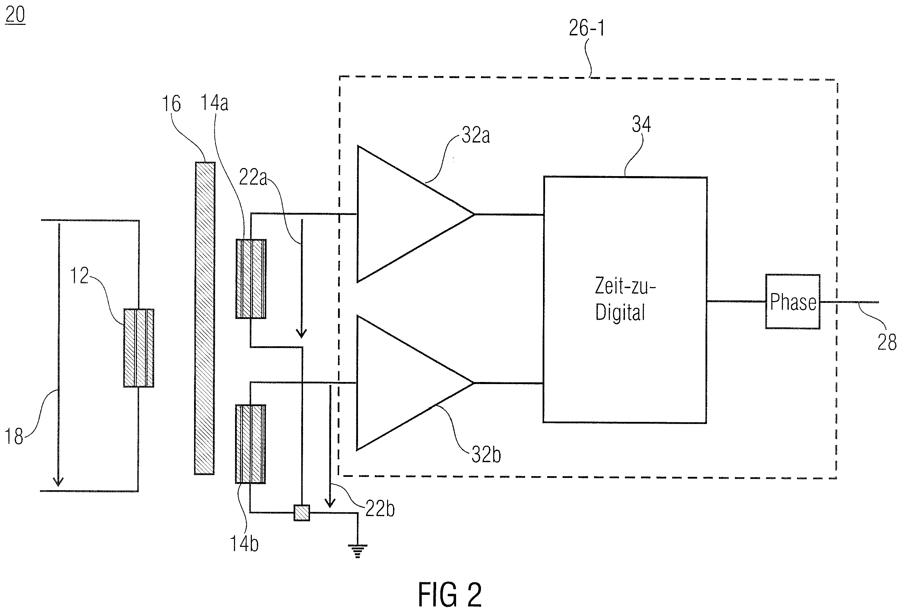

Fig. 2 zeigt ein schematisches Blockschaltbild eines Sensors 20, bei dem die Auswerteeinrichtung 26-1 eine Verstärkereinrichtung 32a und eine Verstärkereinrichtung 32b umfasst. Die Verstärkereinrichtung 32a ist ausgebildet, um eine Amplitude des Ausgangssignals 22a der Sekundärspule 14a zu verstärken. Die Verstärkereinrichtung 32b ist ausgebildet, um eine Amplitude des Ausgangssignals 22b der Sekundärspule 14b zu verstärken.

Die Auswerteeinrichtung 26-1 umfasst ferner einen Zeit-zu-Digital-Konverter 34 (Time-to-Digital-Converter - TDC), wie etwa das Model GP 22 der Firma acam oder das Model THS788 der Firma Texas Instruments, der ausgebildet ist, um einen zeitlichen Versatz zwischen einem Merkmal des Ausgangssignals 22a und einem Merkmal des Ausgangssignals 22b zu erfassen. Bei den Merkmalen kann es sich beispielsweise um ein Signalmaximum, ein Signalminimum, einen Nulldurchgang oder einen bestimmten Amplitudenwert des jeweiligen Ausgangssignals handeln. Alternativ ist ebenfalls vorstellbar, dass das Merkmal ein Wendepunkt einer mathematischen Ableitung oder ein auf eine andere Weise bestimmter oder berechneter Wert des jeweiligen Signalverlaufs ist. Der zeitliche Versatz kann sich auf das selbe Merkmal oder zwei von einander verschiedene Merkmale beziehen. So kann bspw. bei einem ersten Signal eine steigende Flanke und bei einem zweiten Signal eine fallende Flanke des Signals erfasst werden. Eine Verschiebung zwischen den Merkmalen, wie etwa eine Zeitdifferenz zwischen steigender und fallender Flanke kann als Offset in dem Messsignal berücksichtigt werden, da beide Ausgangssignale 22a und 22b die gleiche Frequenz aufweisen. Ist die Verstärkereinrichtung 32a bzw. 32b beispielsweise ein Komparator mit einer asymmetrischen Spannungsversorgung, d. h. mit einer Potentialdifferenz bspw. zwischen Null Volt und einem Potential ungleich Null, so kann die Verstärkereinrichtung 32a bzw. 32b einen Signalwert von 0 oder nahezu 0 ausgeben, wenn eine Amplitude des Ausgangssignals 22a bzw. 22b unterhalb eines vordefinierten Schwellwertes des Komparators liegt. Die Verstärkereinrichtung 32a bzw. 32b kann einen Signalwert von in etwa der Versorgungsspannung der Verstärkereinrichtung 32a bzw. 32b ausgeben, wenn die Amplitude des Ausgangssignals 22a bzw. 22b oberhalb des vordefinierten Schwellwertes liegt.

Ist das Erregersignal 18 beispielsweise ein periodisches Signal, wie etwa ein Sinussignal, so können auch die Ausgangssignale 22a und 22b periodisch bzw. sinusförmig sein, sodass die vordefinierten Schwellwerte der Verstärkereinrichtungen 32a und 32b periodisch über- und unterschritten werden. Der Zeit-zu-Digital-Konverter 34 kann ausgebildet sein, um einen Zeitversatz zwischen einem Auftreten des Merkmals in dem Ausgangssignal 22a und dem Ausgangssignal 22b, wie etwa dem Unter- oder Überschreiten des Schwellwertes, zu messen und einen digitalen Wert oder ein digitales Signal zu liefern, wobei der digitale Wert oder das digitale Signal ein Maß für den Phasenversatz ist oder mit dem Phasenversatz korreliert ist. Das Maß für den Phasenversatz kann bspw. ein Zeitdifferenzwert sein. So kann der digitale Wert eine Anzahl von Taktzyklen sein, die zwischen einem Über- oder Unterschreiten des Schwellwertes durch das Ausgangssignal 22a und einem nachfolgenden Über- oder Unterschreiten des Schwellwertes durch das Ausgangssignal 22b liegen. In anderen Worten kann das Ausgangssignal 22a das Start- oder Stoppsignal und das Ausgangssignal 22b das Stopp- bzw. Startsignal für eine Zeitdifferenzmessung bilden. Zusätzlich kann beispielsweise eine erste die Periode des Stoppsignals für die Phasen- bzw. Zeitmessung ignoriert werden und eine Zeitdifferenzmessung basierend auf einer zweiten Periode erfolgen. Die erste Periode kann genutzt werden, um dadurch eine Richtungserkennung des Kopplungselementes 16 zu ermöglichen, sodass die Richtungserkennung ohne zusätzlichen Aufwand ermöglicht werden kann.

In anderen Worten kann aufgrund der sehr hohen Zeitauflösung kommerziell erhältlicher TDC-Bausteine eine entsprechend hohe Ortsauflösung des LVDT-Sensors erreicht werden. Eine Verwendung eines TDC-Bausteins ermöglicht ein Erhalten der Messdaten unmittelbar in digitaler Form, sodass ein Analog-Digital-Umsetzer zur Digitalisierung analoger Messwerte entfallen kann. Alternativ kann anstelle eines kommerziell erhältlichen TDC-Bausteins auch die Zeit-zu-Digital-Konversion mit Hilfe eines Mikrokontrollers, eines Mikroprozessors, eines (Mikro-)computers, einem feldprogrammierbaren Gatter-Array (FPGA), einem Komplex-Programmierbaren Logikbaustein (CPLD), einem digitalen Signalprozessor, einem anwendungsspezifischem integrierten Schaltkreis (ASIC) oder dergleichen realisiert werden.

Alternativ können die Verstärkungseinrichtungen 32a und/oder 32b eine symmetrische Spannungsversorgung, d. h. mit einer Potentialdifferenz zwischen einem positiven und einem betragsmäßig gleichen Potentialwert, aufweisen, sodass ein verstärktes Signal, wie die Ausgangssignale 22a bzw. 22b, Nulldurchgänge aufweisen. Prinzipiell kann ein beliebiger Schaltschwellwert innerhalb des Ausgangsspannungsbereichs der Verstärkereinrichtungen als triggerndes, d.h. auslösendes Ereignis definiert werden, wie beispielsweise ein Spannungsmittelwert oder Spannungsmittelwert mit einem Offset, wie beispielsweise 100 mV, 200 mV oder 500 mV.

Die Verstärkungsreinrichtung 32a bzw. 32b kann alternativ auch in Form eines Analog- oder Digitalverstärkers oder eines Operationsverstärkers oder eines Transistors realisiert sein.

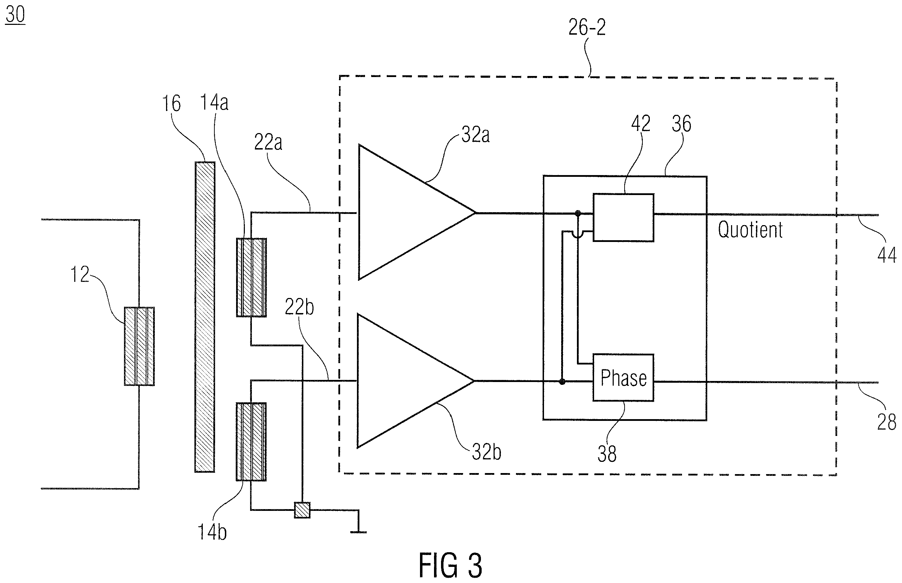

Fig. 3 zeigt ein schematisches Blockschaltbild eines Sensors 30 mit einer Auswerteeinrichtung 26-2, die eine Berechnungseinrichtung 36 aufweist. Die Berechnungseinrichtung 36 umfasst einen Phasendetektor 38 und einen Quotientenbestimmer 42. Der Phasendetektor 38 und der Quotientenbestimmer 42 sind jeweils mit den Verstärkungsreinrichtungen 32a und 32b verbunden, d.h. der Phasendetektor 38 und der Quotientenbestimmer 42 sind jeweils ausgebildet, die von den Verstärkungsreinrichtungen 32a und 32b verstärkten Ausgangssignale 22a und 22b zu empfangen. In anderen Worten sind die von den Verstärkungsreinrichtungen 32a und 32b verstärkten Ausgangssignale 22a und 22b bezogen auf die auszuwertenden Merkmale Phase bzw. Quotient die Ausgangssignale 22a und 22b.

Der Phasendetektor 38 ist ausgebildet, um eine Phasendifferenz zwischen den Ausgangssignalen 22a und 22b bzw. zwischen den von den Verstärkungseinrichtungen 32a und 32b ausgegebenen Signalen zu bestimmen. Der Phasendetektor 38 kann die Phasendifferenz bspw. über eine Multiplikation der beiden Ausgangssignale 22a und 22b erhalten. Dies ist nachfolgend beispielhaft anhand von Rechenoperationen basierend auf Cosinusanteilen von Signalen dargestellt. Ist $\omega t$ eine Periodendauer des Erregersignals und der Ausgangssignale 22a und 22b und ist das Ausgangssignal 22a oder 22b gegenüber dem Ausgangssignal 22b oder 22a um die Phasendifferenz $\varphi$, verschoben, so führt eine Multiplikation der Cosinus-Anteile der jeweiligen Signale beispielsweise zu:

$$cos(\omega t) * cos(\omega t + \varphi) =$$

$$cos(\omega t) * \big(cos(\omega t) * cos(\varphi) - sin(\omega t) * sin(\varphi)\big) =$$

$$cos^2(\omega t) * cos(\varphi) - cos(\omega t) * sin(\omega t) * sin(\varphi) =$$

$$cos^2(\omega t) * cos(\varphi) - \left(\frac{1}{2}\big(sin(\omega t - \omega t) + sin(\omega t + \omega t)\big)\right) * sin(\varphi) =$$

$$cos^2(\omega t) * cos(\varphi) - \frac{1}{2} sin(2\omega t) * sin(\varphi) =$$

$$\frac{1}{2}\big(1 + cos(2\omega t) * cos(\varphi)\big) - \frac{1}{2} sin(2\omega t) * sin(\varphi) =$$

$$\frac{1}{2} cos(\varphi) + \frac{1}{2} cos(2\omega t) * cos(\varphi) - \frac{1}{2} sin(2\omega t) * sin(\varphi)$$

Werden von der Frequenz w abhängige Terme, bspw. über ein Tiefpassfilter, extrahiert, d. h. zu Null gesetzt, so kann auf den Gleichanteil, d. h. den von der Frequenz w unabhängigen Term

$$\frac{1}{2} cos(\varphi)$$

geschlossen werden. Dieser basiert auf der Phasenverschiebung φ, sodass ein Maß für die Phase φ erhalten werden kann.

Der Quotientenbestimmer 42 ist ausgebildet, um ein Verhältnis der verstärkten Signale zu bilden, beispielsweise indem eine Signalamplitude der Verstärkungsreinrichtung 32a oder 32b durch eine Signalamplitude der Verstärkungsreinrichtung 32b oder 32a dividiert wird. Alternativ kann das Verhältnis auch andere Werte der Ausgangssignale 22a und 22b zu einander in ein Verhältnis setzen. Der Quotientenbestimmer 42 ist ferner ausgebildet, um ein Amplitudenverhältnissignal 44 basierend auf dem Quotienten auszugeben, sodass bspw. eine Amplitude des Amplitudenverhältnissignals ein Maß für den Quotienten ist.

Das Amplitudenverhältnissignal 44 kann zur Referenzierung von Positionsinformationen oder Informationen einer Positionsänderung des Kopplungselementes 16 genutzt werden, beispielsweise wenn der Sensor 30 in einer nicht metallischen Umgebung eingesetzt wird. So kann bspw. eine veränderte Phasendifferenz mit einem veränderten Amplitudenverhältnissignal 44 korreliert werden, um eine Plausibilität einer veränderten Phasendifferenz zu ermitteln. Eine nicht metallische Umgebung kann beispielsweise eine Kunststoffpumpe oder eine andere Vorrichtung mit einem beweglichen Element sein, die zu einem großen Teil oder vollständig aus nicht metallischen Bauteilen besteht.

Die Berechnungseinrichtung 36 kann auch als Gain-Phase-Detektor bezeichnet werden. Solch eine Komponente kann beispielsweise unter der Bezeichnung AD8302 von dem Unternehmen Analog Devices bezogen werden. Im Allgemeinen liefern solche Bausteine bzw. deren Phasendetektoren eine Ausgangsspannung, die der Phasenverschiebung zweier Eingangssignale proportional ist. Dies kann dem oben beschriebenen Gleichanteil entsprechen. Eine Richtungserkennung, d.h. eine Richtung in welcher das Kopplungselement 16 verschoben wird, kann beispielsweise durch eine Anordnung eines Phasenschiebers erfolgen. Eine vorbestimmte Phasenverschiebung zwischen den Ausgangssignalen 22a und 22b kann mittels des Phasenschiebers zu einer Änderung des Phasenergebnisses führen, sodass bspw. bei sinusförmigen Ausgangssignalen 22a und 22b eine Richtung der Bewegung des Kopplungselementes 16 durch Auswertung der unverschobenen und der verschobenen Ausgangssignale 22a und 22b detektierbar ist. Ein Phasenschieber kann beispielsweise ein Signal um +90° oder -90° verschieben, um so phasenverschobene Werte zu erhalten.

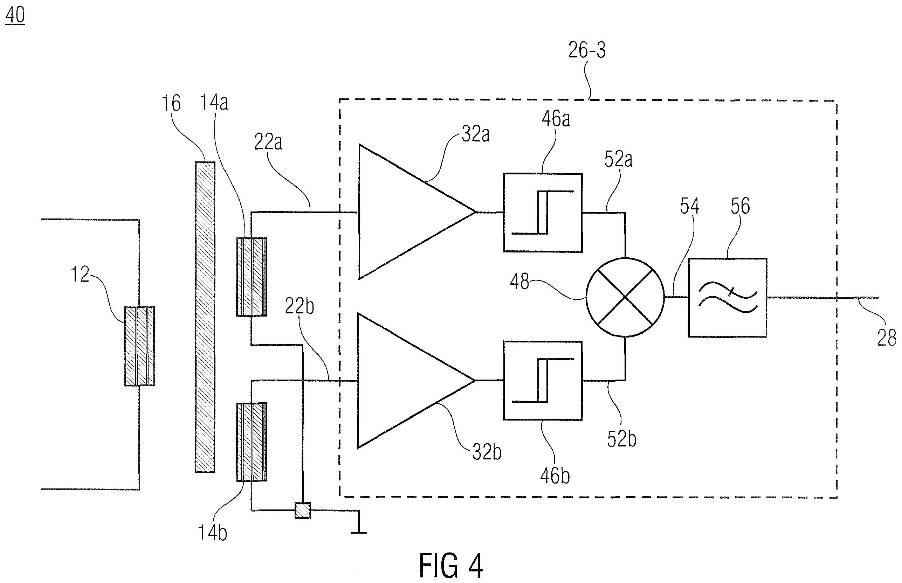

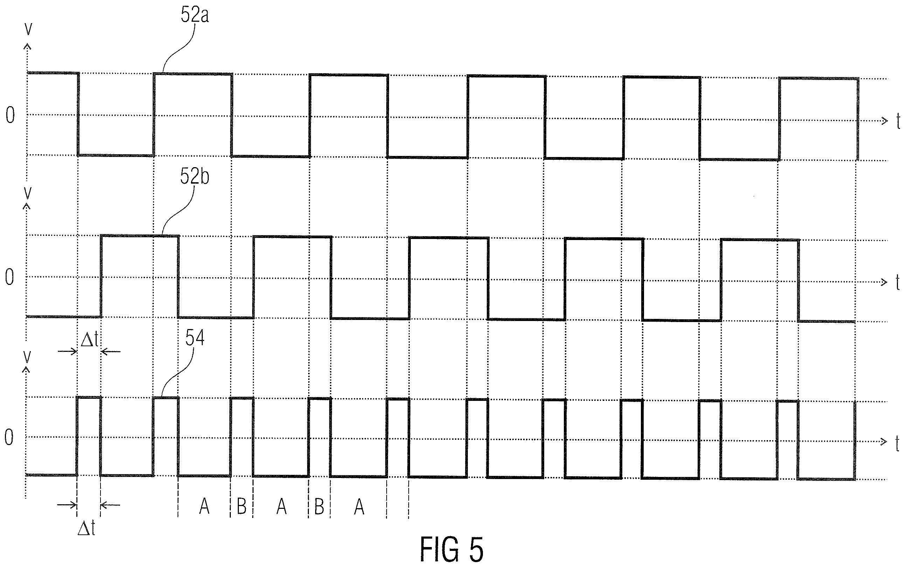

Fig. 4 zeigt ein schematisches Blockschaltbild eines Sensors 40, der eine Auswerteeinrichtung 26-3 mit den Verstärkungsreinrichtungen 32a und 32b sowie zwei Signalumformern 46a und 46b und einen Multiplizierer 48 umfasst. Die Signalumformer 46a und 46b sind ausgebildet, um ein Merkmal des Ausgangssignals 22a bzw. 22b, bzw. der von den Verstärkungseinrichtungen 32a und 32b bereitgestellten verstärkten Signale zu verstärken, d.h. diese Merkmale hervorzuheben. Die Signalumformer 46a und 46b sind ferner ausgebildet, um eine Phaseninformation der Ausgangssignale 22a und 22b bzw. eine Phasendifferenz zwischen den Ausgangssignalen 22a und 22b im Wesentlichen unverändert zu lassen. In anderen Worten können die umgeformten Signale 52a und 52b eine gleiche Phasendifferenz zueinander aufweisen, wie die Ausgangssignale 22a und 22b. Alternativ kann die Phasendifferenz zwischen den umgeformten Signalen 52a und 52b auch proportional, d. h. wiederherstellbar, zu der Phasendifferenz der Ausgangssignalen 22a und 22b sein. Die Signalumformer 46a und 46b können beispielsweise Schmitt-Trigger-Schaltungen oder Komparatorenschaltungen sein und sind ausgebildet, um ein Merkmal des Ausgangssignals 22a bzw. 22b, bzw. der von den Verstärkungseinrichtungen 32a und 32b bereitgestellten verstärkten Signale zu verstärken, d.h. diese Merkmale hervorzuheben. Das Merkmal kann beispielsweise ein Nulldurchgang oder das Über- oder Unterschreiten eines Schwellwertes sein. So kann ein Signalumformer 46a bzw. 46b beispielsweise basierend auf einem Vorzeichen eines von den Verstärkern 32a oder 32b bereitgestellten Signals ein Rechtecksignal generieren, wie es beispielhaft in nachfolgender Fig. 5 dargestellt ist.

Der Multiplizierer 48 kann beispielsweise ein Analog- oder Digitalmultiplizierer sein und ist ausgebildet, um die umgeformten Signale 52a und 52b miteinander zu multiplizieren. Der Multiplizierer 48 ist ferner ausgebildet, um ein Multiplikationssignal, basierend auf einem Ergebnis der Multiplikation der umgeformten Signale 52a und 52b zu liefern. Das Multiplikationssignal 54 kann einen Gleichanteil in Abhängigkeit von der Phasenverschiebung zwischen den Ausgangssignalen 22a und 22b bzw. der umgeformten Signale 52a und 52b aufweisen. Die Auswerteeinrichtung 26-3 umfasst einen Tiefpassfilter 56, der ausgebildet ist, um das Multiplikationssignal 54 zu empfangen und das Sensorausgangssignal 28 basierend auf dem Gleichanteil des Multiplikationssignals 54 bereitzustellen.

In anderen Worten kann der Gleichanteil der Multiplikation zweier Eingangssignale dem Betrag oder einem Maß der Phasendifferenz entsprechen.

Eine zusätzliche Anordnung eines Phasenschiebers kann mit einem geringen Schaltungsaufwand eine Richtungserkennung der Bewegung des Kopplungselementes 16 ermöglichen.

Fig. 5 zeigt eine schematische Gegenüberstellung der zwei umgeformten Signale 52a und 52b aus Fig. 4 zur Verdeutlichung des Informationsgehaltes des Gleichanteils des Multiplikationssignals 54.

Die umgeformten Signale 52a und 52b sind beispielshaft symmetrisch um einen Signalwert von 0 dargestellt. In anderen Worten sind die umgeformten Signale 52a und 52b mittelwertfrei. Alternativ ist ebenfalls vorstellbar, dass die umgeformten Signale 52a und 52b mittelwertbehaftet sind, beispielsweise wenn die umgeformten Signale 52a und 52b Signalamplituden aufweisen, die zwischen 0 und einer positiven oder negativen maximalen Amplitude alternieren. Die frequenzgleichen Ausgangssignale, die in die umgeformten Signale 52a und 52b umgeformt sind, weisen einen Phasenversatz auf, der im Zeitbereich mit der Zeitdifferenz $\Delta t$ messbar ist. In Zeitabschnitten A weisen die umgeformten Signale 52a und 52b voneinander verschiedene Vorzeichen auf, sodass das Multiplikationssignal 54 ein negatives Vorzeichen aufweist. In Zeitabschnitten B weisen die umgeformten Signale 52a und 52b gleiche Vorzeichen auf, sodass das Multiplikationssignal 54 in den Zeitabschnitten B ein positives Vorzeichen aufweist. Weisen die umgeformten Signale 52a und 52b einen Phasenversatz zueinander auf, der ungleich einem Vielfachen von 90° ist, sind die Zeitdauern der Zeitabschnitte A von den Zeitdauern der Zeitabschnitte B verschieden, d.h. das Multiplikationssignal 54 ist in diesen Fällen mittelwertbehaftet. Eine Größe des Mittelwertes kann von der Phasenverschiebung zwischen den umgeformten Signalen 52a und 52b abhängen. In anderen Worten kann ein Maß des Gleichanteils des Multiplikationssignals 54 ein Maß für die Phasenverschiebung zwischen den umgeformten Signalen 52a und 52b sein.

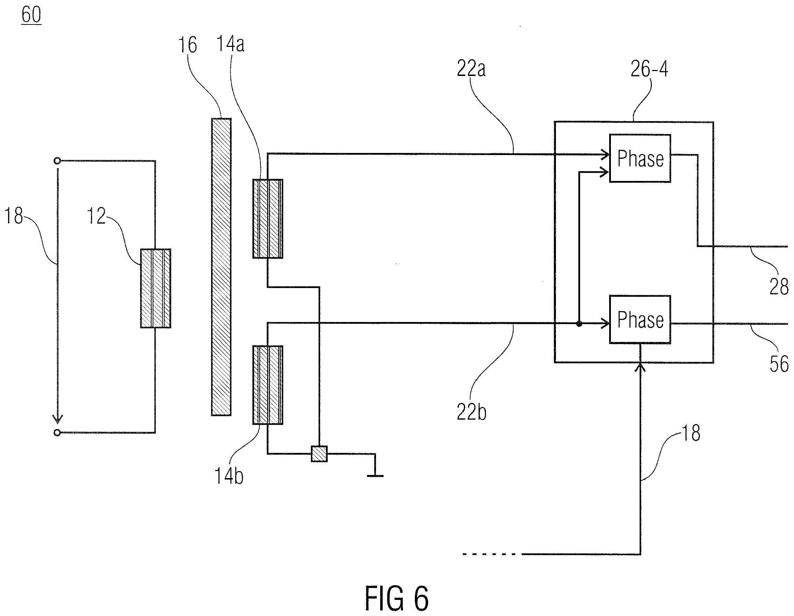

Fig. 6 zeigt eine schematische Darstellung eines Sensors 60 mit der Primärspule 12, an welche das Erregersignal 18 angelegt ist, den Sekundärspulen 14a und 14b, dem Kopplungselement 16 und eine Auswerteeinrichtung 26-4. Die Auswerteeinrichtung 26-4 ist ausgebildet, um einen zeitlichen Versatz zwischen dem Ausgangssignal 22b und dem Erregersignal 18 zu bestimmen und um ein Offsetsignal 56 zu liefern, welches auf dem zeitlichen Versatz, d.h. der Phasendifferenz zwischen dem Erregersignal 18 und dem Ausgangssignal 22b, basiert. In anderen Worten ist alternativ ebenfalls vorstellbar, dass die Auswerteeinrichtung 26 ausgebildet ist, um eine Phase des Ausgangssignals 22a und eine Phase des Ausgangssignals 22b zu bestimmen. Die Auswerteeinrichtung 26 kann ausgebildet sein, um den Phasenversatz basierend auf einem Vergleich, wie beispielsweise einer Differenzbildung zwischen den Phasen des Ausgangssignals 22a und des Ausgangssignals 22b zu bestimmen.

In anderen Worten wird bei dieser Schaltung zusätzlich zur Betrachtung des Phasenversatzes zwischen den beiden Sekundärsignalen 22a und 22b auch noch der Versatz derselben zum Primärsignal 18 ausgewertet. Dadurch können weitere Kompensationsmöglichen geschaffen werden, beispielsweise indem Störeffekte durch eine Änderung externer magnetischer Felder erkannt und aus dem Messsignal herausgerechnet werden können.

Wird Sensor 60 beispielsweise in einer metallischen Umgebung oder in einem metallischen Gehäuse betrieben, so kann zusätzlich zu der Kopplung zwischen Primärspule 12 und den Sekundärspulen 14a und 14b durch das Kopplungselement 16 eine von der metallischen Umgebung abhängige sogenannte Grundkopplung zwischen der Primärspule 12 und den Sekundärspulen 14a und 14b vorhanden sein. Die Grundkopplung kann zu einem Offset in Amplitude und/oder Phase in dem Sensorausgangssignal 28 führen. Der Offset kann dabei aufgrund des symmetrischen Aufbaus zwischen der Primärspule 12 und den Sekundärspulen 14a und 14b bei beiden Ausgangssignalen 22a und 22b in etwa gleich sein.

Das Offsetsignal 56 kann beispielsweise von dem Sensorausgangssignal 28 subtrahiert werden, um die Effekte der Grundkopplung zu kompensieren. Ferner erlaubt das Offsetsignal 56 eine Beobachtung oder Überwachung der Betriebsbedingungen des Sensors 60, da beispielsweise ein zwischen zwei Zeitpunkten veränderter Offset, d.h. eine veränderte Signalamplitude des Offsetsignals 56, auf eine variierende, d.h. veränderte Grundkopplung zwischen der Primärspule 12 und den Sekundärspulen 14a und 14b schließen lässt. Solche veränderte Umgebungsbedingungen können beispielsweise weitere metallische Objekte in einer Umgebung des Sensors 60 sein.

Alternativ oder zusätzlich kann das Offsetsignal auch basierend auf einer Phasendifferenz zwischen dem Ausgangssignal 22a und dem Erregersignal 18 ermittelt werden.

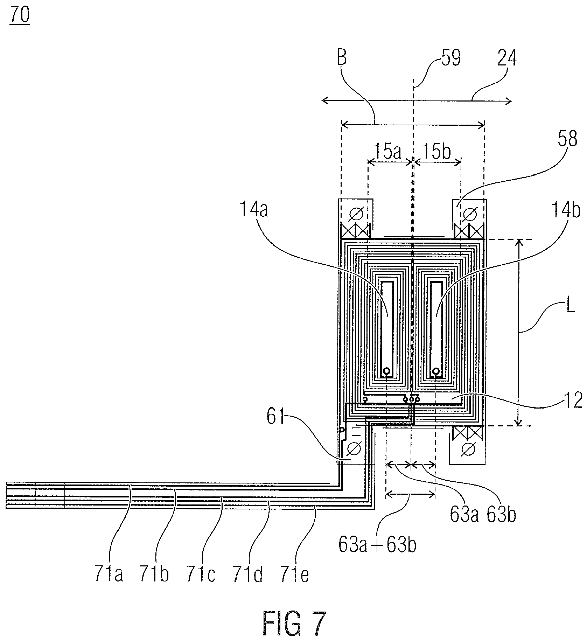

Fig. 7 zeigt eine schematische Draufsicht auf eine Spulenanordnung 70 bei der die Primärspule 12 und die Sekundärspulen 14a und 14b als planare Spulen auf einem flexiblen Substrat 58 ausgeführt sind. In anderen Worten zeigt Fig. 7 einen Footprint des flexiblen Substrats 58 mit Planarspulenanordnung. Eine Realisierung der Primärspule 12 und der Sekundärspulen 14a und 14b als planare Spulen auf dem flexiblen Substrat 58 ermöglicht, dass, anders als bspw. bei klassischen LVDT-Sensoren, auf eine Einfädelung des Kopplungselementes als Spulenkern in eine entsprechende Spulenanordnung verzichtet werden kann, sodass die Spulenanordnung beispielsweise auch nachträglich an eine geometrische Form, wie etwa einen Zylinder oder einen Kegel, in welcher sich der Kern, d. h., das Kopplungselement, befindet, angelegt werden kann. In einer klassischen LVDT-Anordnung ist eine Primärspule mittig zwischen zwei zueinander lateral in einer Bewegungsrichtung angeordneten Sekundärspulen angeordnet. Die Primärspule und die Sekundärspulen können als Rund- oder Hohlwicklungen ausgeführt sein, sodass das Kopplungselement, bspw. als Stab, als beweglicher Spulenkern innerhalb der Primärspule und den Sekundärspulen in der Bewegungsrichtung bewegbar ist. Weiterhin können derartige Planarspulen 12, 14a und/oder 14b kostengünstig mittels Flex-Folien und Leiterplattentechnik herstellbar sein.

Ein Gesamtmessbereich eines Sensors mit dem Substrat 58 kann bspw. größer oder gleich der Breite 15a oder 15b einer der nebeneinander angeordneten Sekundärspulen 14a oder 14b in Richtung der vorbestimmten Bewegungsrichtung 24 des Kopplungselementes sein. Dabei kann bspw. je eine Hälfte des Gesamtmessbereichs um eine Mittenposition 59 angeordnet sein. Alternativ kann der Gesamtmessbereich größer oder gleich einem kürzesten Abstand zwischen den zwei Sekundärspulen 14a und 14b sein. Die Windungen der Primärspule 12 umschließen die Windungen der Sekundärspulen 14a und 14b. In der Bewegungsrichtung 24 können bspw. Windungen auf dem Substrat 58, die nicht innerhalb der Breite 15a oder 15b angeordnet sind, Windungen der Primärspule sein. Eine Länge L der Spulenanordnung kann bspw. 15 mm betragen. Eine Breite B der Spulenanordnung kann bspw. 20 mm betragen. Ein Abstand 63a bzw. 63b von der Mittenposition 59 zu einer Mitte der Sekundärspule 14a bzw. 14b kann 3,5 mm betragen, sodass eine Breite 15a bzw. 15b der Sekundärspule 14a bzw. 14b jeweils das doppelte des Abstandes 63a bzw. 63b und mithin in etwa 7 mm beträgt. Der Gesamtmessbereich kann als kürzester Abstand der beiden Sekundärspulen 14a und 14b (63a+63b) oder als Breite der Spule dann in etwa 7 mm betragen.

Alternativ kann das Substrat 58, die Primärspule 12 und/oder die Sekundärspulen 14a und 14b beliebige Abmessungen aufweisen.

Anschlussleitungen 71 a und 71 b der Primärspule 12 und/oder Anschlussleitungen 71 c, 71d, 71 e der Sekundärspulen 14a und 14b sind an einem länglichen Substratteil 61 angeordnet. Das längliche Substratteil 61 kann eine beliebige Form oder Länge aufweisen und bspw. eine Verbindung zu der Auswerteeinrichtung zumindest über Teile der Entfernung zwischen dem Substrat 58 und der Auswerteeinrichtung bereitstellen. Der längliche Substratteil 61 ist einstückig mit dem Substrat 58 gebildet.

Eine planare Ausführungsform der Spulenanordnung ermöglicht eine sehr platzsparende Realisierung, insbesondere bei einer reduzierten Anzahl von Windungen in der Primärspule und/oder den Sekundärspulen. Eine geringe Windungszahl ermöglicht ferner eine vergleichsweise geringe Induktivität der Spulen. Die Induktivität kann beispielsweise im Bereich von 2-500 $\mu$H, 3-100 $\mu$H oder 4-20 $\mu$H liegen und/oder beispielsweise einen Widerstand von 25 $\Omega$ oder 50 $\Omega$ bei einer Signalfrequenz von 1 MHz aufweisen. Alternativ können die Primärspule und/oder die Sekundärspulen, bspw. auch in Form einer gewickelten Folie mit ggf. ähnlichen Induktionswerten realisiert sein.

Klassische LVDT Ausführungen mit einem beweglichen Spulenkern gemäß obigen Ausführungen können dahingegen bspw. Induktivitäten im Bereich von mehr als 1 mH aufweisen. Eine verringerte Induktivität kann zu einem verringerten Leistungsbedarf der Primärspule führen, wenn diese mit einem Wechselsignal beaufschlagt wird. Dies kann Bauteile mit einem kleineren Leistungsbedarf und / oder geringerem Bauraumbedarf und ggf. mit einem reduzierten Kostenumfang ermöglichen.

Eine Dicke des Substrates 58 bzw. der gesamten Spulenanordnung kann dabei in einem Bereich von ca. 100 $\mu$m liegen, wie bei einer Dicke von weniger als 500 $\mu$m, weniger als 200 $\mu$m oder weniger als 150 $\mu$m. So kann ein Folien-LVDT an verschiedenste Umgebungsbedingungen und Umgebungsformen adaptierbar sein. Planare LVDT-Spulen können kostengünstig, derzeit im Bereich von etwa 0,10 € hergestellt werden. Ein Wegbereich, innerhalb dessen eine Position oder eine Positionsänderung des Kopplungselementes von dem Sensor detektierbar ist, kann basierend auf dem Folienlayout einfach angepasst werden, indem bspw. Ausdehnungen und/oder Orientierungen der Primärspule 12 und/oder der Sekundärspulen 14a und 14b angepasst werden. Wird für das Folienlayout beispielsweise eine Kapton-Laminierung genutzt, kann die Spulenanordnung robust gegenüber thermischen und/oder mechanischen äußeren Einflüssen realisiert werden.

Beispielsweise kann die Spulenanordnung 70 um ein Bauteil einer Vorrichtung, die das Kopplungselement 16 aufweist oder benachbart zu dem Kopplungselement 16 angeordnet ist, herumgeformt und befestigt werden.

Ferner ermöglicht ein Folienlayout einen hohen Signalhub, d.h. deutliche unterscheidbare Signalamplituden, da basierend auf einer niedrigen Induktivität eine hochfrequente Ansteuerung der Spulen möglich ist. Die hochfrequente Ansteuerung kann beispielsweise in einem Frequenzbereich zwischen 500 kHz und 10 MHz, zwischen 700 kHz und 7 MHz oder zwischen 800 kHz und 5 MHz, wie etwa 1 MHz, betragen. Trotz der hohen Frequenzen können die dadurch erzeugten Energieverluste bei einer Umpolung der Spulen niedrig sein, sodass beispielsweise Stromaufnahmen von weniger als 100 mA, weniger als 50 mA oder weniger als 15 mA erreichbar sein können.

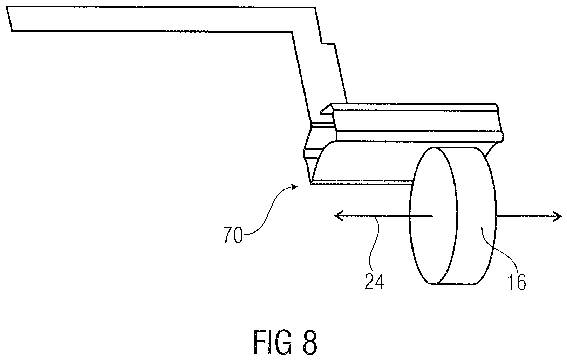

Fig. 8 zeigt die Spulenanordnung 70 aus Fig. 7, die beispielhaft zu einer räumlichen Anordnung gebogen ist. Die räumliche Anordnung bildet beispielhaft eine Wölbung aus, sodass das Kopplungselement 16, welches möglicherweise als Kolben, wie er in einer Pumpe angeordnet sein kann, ausgebildet ist, koradial entlang der Wölbung entlang einer zu den Sekundärspulen symmetrischen Bewegungsbahn entlang der Bewegungsrichtung 24 bewegbar ist.

Das Substrat der Spulenanordnung 70 ist als flexibles Substrat realisiert, sodass es bspw. um ein Trägerbauteil, an dem die Spulenanordnung 70 angeordnet ist, herum geformt ist. Das flexible Substrat ist zu einer dreidimensionalen Anordnung geformt. Eine dem Kopplungselement 16 zugewandte Oberfläche der dreidimensionalen Anordnung, die die beiden Sekundärspulen 14a und 14b und zumindest einen Teil der Primärspule 12 aufweist, ist gewölbt, d. h., nicht planar. So kann die nicht planare Oberfläche an eine nicht planare Oberfläche des Kopplungselementes 16 angepasst sein, wie etwa die runde, nicht planare Außenfläche des dargestellten Zylinders, der das Kopplungselement 16 ist. Vorteilhaft an einer derart angepassten Oberfläche der Spulenanordnung ist, dass ein Abstand zwischen der Spulenanordnung 70 und dem Kopplungselement 16 über die Länge der Spulenanordnung angepasst, etwa reduziert oder minimiert, sein kann und so eine Einkopplung in die Sekundärspulen 14a und 14b optimiert sein kann.

In anderen Worten zeigt Fig. 8 eine Ausführung des LVDT-Sensors als Planarspulenanordnung auf einem flexiblen Substrat.

Die Primär- und die beiden Sekundärspulen sind als planare Spulen auf einem flexiblen Substrat in der Spulenanordnung 70 angeordnet. Durch Biegen des flexiblen Substrats wird dabei beispielsweise eine Halbschale gebildet, in welcher sich das Kopplungselement, beispielsweise ein ferromagnetischer Kern, bewegen kann. Vorteilhaft ist, dass, anders als bei klassischen LVDT-Sensoren, der Kern nicht in eine Spulenanordnung eingefädelt werden muss, sondern dass die Spulenanordnung z.B. auch nachträglich an eine zylindrische Form, in welcher sich der Kern befindet, angelegt werden kann. Ein weiterer Vorteil des Ausführungsbeispiels ist die Möglichkeit der sehr kostengünstigen Herstellung solcher Flex-Folien mittels Leiterplattentechnik.

Aufgrund der planaren Ausführung kann die Spulenanordnung extrem platzsparend sein. Damit einher kann auch eine niedrige Windungszahl und damit eine vergleichsweise geringe Induktivität der Spulen gehen. Geeignete Schaltungskonzepte erlauben eine energieeffiziente und hochfrequente Auswertemöglichkeit. In andern Worten kann eine Verwendung von höheren Frequenzen, die von den Auswerteschaltungen verarbeitet werden können, im Gegenzug einen Einsatz niedriger Induktivitäten ermöglichen.

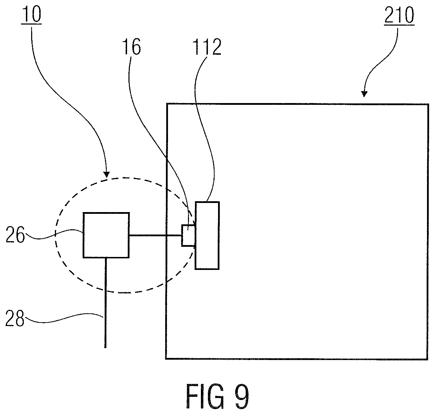

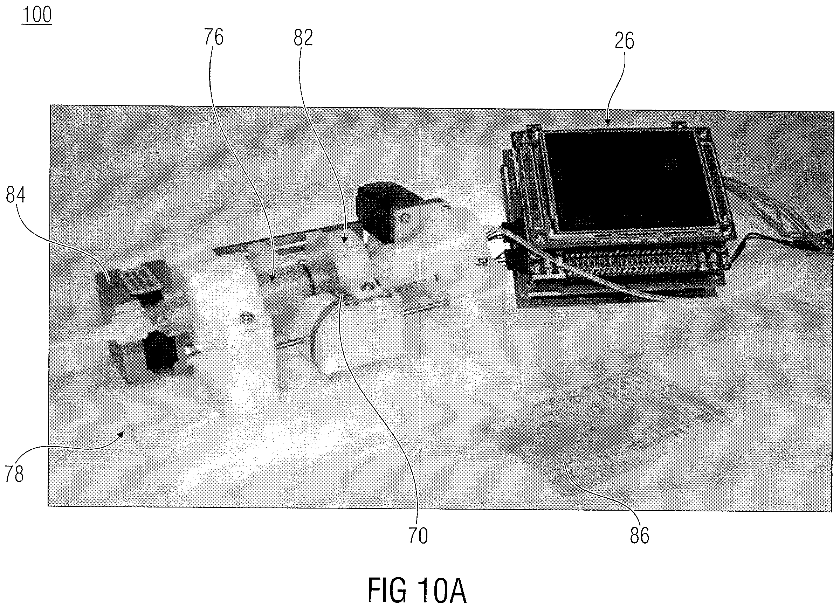

Fig. 9 zeigt ein schematisches Blockschaltbild einer Vorrichtung 210 mit einem beweglichen Element 112. Die Vorrichtung 210 kann beispielsweise eine Pumpe mit einem beweglichen Pumpenkolben oder eine Fräse mit einem beweglichen Fräskopf sein. Prinzipiell kann es sich bei der Vorrichtung 210 um eine beliebige Vorrichtung handeln. Der Sensor 10 bzw. das Kopplungselement 16 sind mit dem beweglichen Element 112 verbunden, sodass eine Position des Kopplungselementes 16 von einer Position des beweglichen Elementes 112 beeinflusst wird, d.h. abhängt. Die Auswerteeinrichtung 26 ist ausgebildet, um das Sensorausgangssignal 28 auszugeben, sodass basierend auf dem Sensorausgangssignal 28 auf eine Position des beweglichen Elementes 112 zurückgeschlossen werden kann. Alternativ kann das bewegliche Element 112 auch das Kopplungselement 16 sein, wie es beispielsweise in der Fig. 10a dargestellt ist. In der Fig. 10a ist der Pumpenkolben das Kopplungselement 16.

Obwohl in Fig. 9 dargestellt ist, dass der Sensor 10 mit der Vorrichtung 210 verbunden ist, kann alternativ auch einer der Sensoren 20, 30, 40 oder 60 an der Vorrichtung 210 angeordnet sein. Alternativ kann eine beliebige Weiterbildung der Sensoren 10, 20, 30, 40 oder 60 an der Vorrichtung 210 angeordnet sein.

Fig. 10a zeigt ein experimentelles Setup 100 mit einer Kolbenpumpe, die ein Pumpengehäuse 76 aufweist und ein experimentelles Anwendungsbeispiel mit einer Durchflussmessung in einer Kolbenpumpe. Die Kolbenpumpe ist in einem JIG, d.h. Testaufbau, 78 befestigt ist. Ein Trägerbauteil 82, wie etwa ein Verfahrschlitten, wird von einem Linearantrieb 84 angetrieben, der seinerseits einen ringförmigen Permanentmagneten, der aufgrund des von dem Permanentmagneten erzeugten Magnetfeldes einen Störkörper für den LVDT darstellen kann, wie es weiter oben beschrieben ist, bewegt. An dem Trägerbauteil 82 ist die Spulenanordnung 70 sowie der ringförmige Permanentmagnet angeordnet. Eine Kreditkarte 86 zeigt die Miniaturisierbarkeit der Sensorvorrichtung. In anderen Worten zeigt das Setup 100 eine induktive Weg-Sensorik mit Störkörper und einem neuartigen Folien-LVDT, welcher bspw. mit einer Frequenz von 1 MHz betrieben wird. Alternativ kann das Setup auch mit Frequenzen von weniger als 1 MHz oder mehr als 1 MHz betrieben werden.

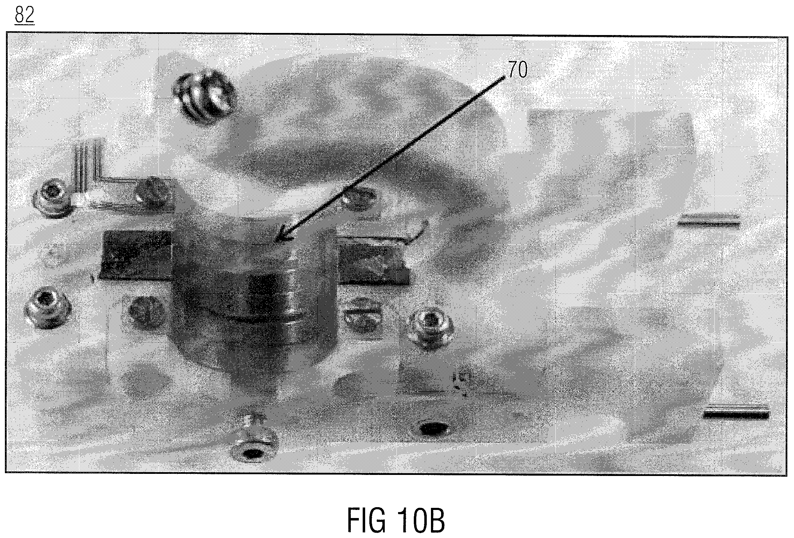

Fig. 10b zeigt eine Detailansicht auf das Trägerbauteil 82, an dem die Spulenanordnung 70 angeordnet ist, die basierend auf der Planarspulentechnik, bzw. Folientechnik an die dreidimensionale Geometrie des Trägerbauteils 82 angepasst werden. In anderen Worten ist, den LVDT 70 umgreifend, ein aus zwei Hälften bestehender, ringförmiger Permanentmagnet im Trägerbauteil 82 angeordnet, der in der gezeigten Darstellung geöffnet ist.

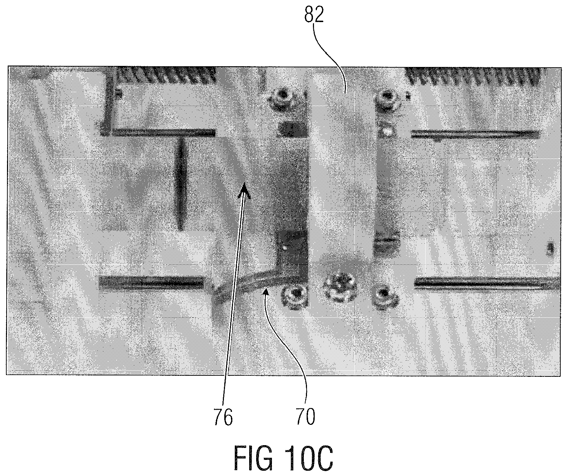

Fig. 10c zeigt eine Detailansicht auf den Ausschnitt des Setups 100, wie er im Wesentlichen in der Fig. 10b dargestellt ist, wobei das Pumpengehäuse von dem Trägerbauteil 82 und einer darin enthaltenen zweiten ringförmigen Hälfte des Permanentmagneten umschlossen ist. Das Pumpengehäuse 76 mit dem Kolben, der das Kopplungselement umfasst, ist benachbart zu der Sensoranordnung 70 angeordnet.

Das Setup 100 ermöglicht eine berührungslose, induktive Positionsmessung des Kolbens über ein flexibles LVDT trotz permanentmagnetischem Störkörper. Die Sensoranordnung kann hochgenaue Messergebnisse liefern und robust ausgelegt sein, d.h. eine Positionsauflösung im Mikrometer-Bereich bei gleichzeitiger Störunempfindlichkeit gegenüber externen Magnetfeldern bereitstellen. Ferner kann das Setup sehr kostengünstig herstellbar sein.

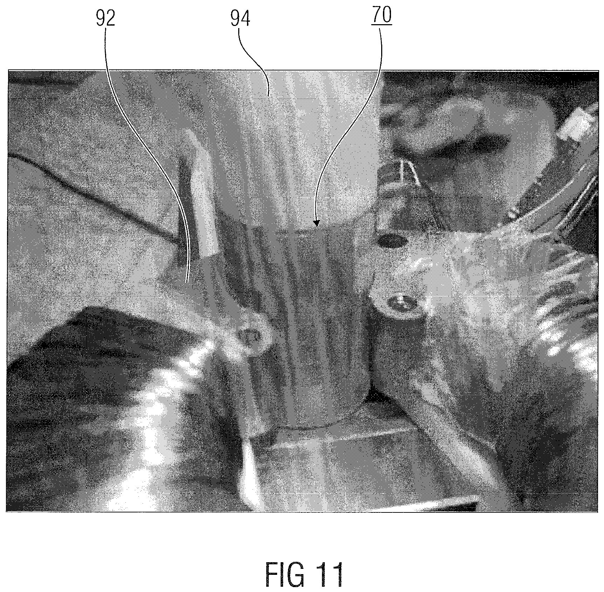

Fig. 11 zeigt die Planarspulenanordnung 70 in einer unmittelbaren Nähe zu einem elektromagnetischen Antrieb 92, der ausgebildet ist, um eine Pumpkammer 94 zu betreiben. In der Pumpkammer 94 ist das Kopplungselement in Form eines Pumpkolbens angeordnet, dessen Position detektiert werden soll.

Fig. 11 zeigt einen LVDT mit Elektromagnet und Phasenauswertung und somit eine weitere Anwendungsmöglichkeit der zuvor dargestellten Ausführungsbeispiele.

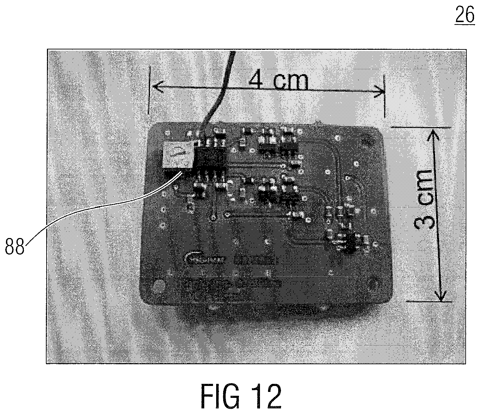

Fig. 12 zeigt eine photographische Darstellung einer beispielhaften Auswerteeinrichtung 26. Die Auswerteeinrichtung 26 weist in ihrer exemplarischen Form eine Grundfläche von 3 cm mal 4 cm auf. Für die Auswertung kann ein geringer Schaltungsaufwand notwendig sein. Die Auswerteschaltung 26 kann mit Low Cost, d.h. günstigen, Bausteinen und Schaltungselementen aufgebaut sein. Ferner kann die Auswerteeinrichtung 26 ausgebildet sein, um eine Verstärkung der Ausgangssignale direkt auf der Platine, beispielsweise in einem Differenzverstärker 88, auszuführen, der ausgebildet ist, um ein Differenzsignal der Ausgangssignale der Sekundärspulen zu verstärken, um so eine erhöhte Störfestigkeit gegen Einkopplungen elektrischer Felder, d.h. elektromagnetische Verträglichkeit (EMV)-Effekte, zu erreichen. Ausgegebene Messwerte können eine digitale Form und eine hohe Auflösung von beispielsweise 8, 12, 16 oder mehr Bit aufweisen. Die sehr kompakte Bauweise der Auswerteeinrichtung 26 erlaubt ferner einen stromsparenden Betrieb, was zu einer erhöhten Energieeffizienz der Vorrichtung führen kann.

In anderen Worten zeigt Fig. 12 eine miniaturisierte Auswerteschaltung 26, die für ein LVDT-Sensorkonzept eingesetzt werden kann. Die Auswerteelektronik kann gleichzeitig ein sehr geringes Rauschen aufweisen, was zu einer erhöhten Messgenauigkeit führen kann. Anmerkung: Ausgangssignal = digital

Fig. 13 zeigt einen schematischen Graphen mit einem Phasengang 62 und einem Amplitudengang 64 zwischen den zwei Sekundärspulen, wie sie bspw. mit einem Setup 100 erfasst werden können. Der Graph zeigt an der Abszisse einen Verfahrweg des Kopplungselementes und an der Ordinate eine resultierende Messkurve der Amplitudenauswertung und Phasenauswertung der Ausgangssignale 22a und 22b bei vorhandenen permanent- und/oder ferromagnetischen Materialien in einer Umgebung des Sensors. Der Amplitudengang 64, der beispielsweise aus einer Differenz der Signalverläufe der Ausgangssignale 22a und 22b gebildet ist, weist entlang des Messverlaufs deutliche Beeinflussungen auf, was an der Breite, das heißt Amplitudenvariation in Ordinatenrichtung an einem Abszissenwert, erkennbar ist. Der Phasengang 62, der eine Phasenbeziehung zwischen den Ausgangssignalen 22a und 22b anzeigt, weist dagegen keine nennenswerte Beeinflussungen auf, was an einer geringen Variation der Phasenwerte in Ordinatenrichtung an einem Abszissenwert erkennbar ist. Ferner ist der Phasengang in einem Bereich 66 im Wesentlichen linear, das bedeutet, basierend auf dem Phasengang 62 ist eine eindeutige Positionserkennung des Kopplungselementes möglich, sodass auf eine Berücksichtigung der Amplitudenwerte der Ausgangssignale 22a und 22b verzichtet werden kann. Dieser Bereich kann ein Betriebsbereich des entsprechenden Sensors sein.

Eine erste Position oder Positionsänderung, d h. Verfahrweg, 65a entspricht einem ersten Phasenversatz 67a, dargestellt in einem Punkt 69a entlang des Phasengangs 62. Eine zweite Position oder Positionsänderung, d. h. Verfahrweg, 65b entspricht einem zweiten Phasenversatz 67b, dargestellt in einem Punkt 69b entlang des Phasengangs 62. Eine dritte Position oder Positionsänderung, d. h. Verfahrweg, 65c entspricht einem dritten Phasenversatz 67c, dargestellt in einem Punkt 69c entlang des Phasengangs 62. Die verschiedenen Positionen oder Positionsänderungen 65a-c weisen jeweils einen von einander verschiedenen Phasenversatz 67a-c auf. Das bedeutet, dass ein Phasenversatz 67a-c eine Position oder Positionsänderung 69a-c darstellt. Die dritte Position oder Positionsänderung 65c ist größer als die zweite Position oder Positionsänderung 65b. Die zweite Position oder Positionsänderung 65b ist größer als die erste Position oder Positionsänderung 65a.

Der jeweils von einander verschiedene Phasenversatz 67a-c zwischen den Ausgangssignalen 22a und 22b in Abhängigkeit der Positionen oder Positionsänderungen 65a-c kann von einer Auswerteeinrichtung in ein Sensorausgangssignal umgesetzt werden, sodass, wie es für die Punkte 69a-c in dem Bereich 66 dargestellt ist, ein Sensorausgangssignalwert eine Position oder Positionsänderung 65a-c darstellt.

Das Sensorausgangssignal kann direkt proportional oder indirekt proportional sein zu der Position. Bei einem direkt proportionalen Sensorausgangssignal steigt das Sensorausgangssignal bei steigendem Verfahrweg bzw. steigender Position oder Positionsänderung 65a-c an, sodass das Sensorausgangssignal bei einem Phasenversatz 67b und mithin der Position 65b größer ist als bei einem Phasenversatz 67a und mithin der Position 65a. Ferner ist das Sensorausgangssignal bei einem Phasenversatz 67c und mithin der Position 65c größer als bei einem Phasenversatz 67b und mithin der Position 65b.

Bei einem indirekt proportionalen Sensorausgangssignal fällt das Sensorausgangssignal bei steigender Position oder Positionsänderung 65a-c ab, sodass das Sensorausgangssignal bei der Position oder Positionsänderung 65b kleiner ist als bei der Position oder Positionsänderung 65a. Ferner ist das Sensorausgangssignal bei der Position oder Positionsänderung 65c kleiner als bei der Position oder Positionsänderung 65b.

Es versteht sich, dass diese Beziehung zwischen Phasenversatz und Position oder Positionsänderung des Kopplungselementes und zu dem Sensorsignal durch eine Veränderung oder Vertauschung von elektrischen Potentialen, Bezugspotentialen der Ausgangssignale 22a und/oder 22b oder der Nutzung von Invertierbausteinen, die ein Vorzeichen eines elektrischen Potentials verändern, bezüglich obiger Ausführungen vertauscht werden kann, wobei ein direkt proportionaler oder indirekt proportionaler Zusammenhang zwischen dem Sensorausgangssignal und dem Phasenversatz erhalten bleibt.

Ein direkt proportionaler Zusammenhang zwischen der Position oder Positionsänderung 65a-c bzw. dem Phasenversatz 67a-c und dem Sensorausgangssignal kann bspw. ein linearer Zusammenhang wie eine Multiplikation mit einem konstanten Wert, ein nichtlinearer Zusammenhang wie etwa eine quadratische oder exponentielle Funktion oder ein Teil einer trigonometrischen Funktion, wie etwa ein Bereich der Sinus-Funktion in einem Winkelumfang von -90° bis 90° oder Teilen davon sein. Ferner kann es sich auch um eine Kombination der genannten oder ähnlichen Funktionen handeln, sodass ein steigender Phasenversatz zu einem steigenden Sensorausgangssignal führt.

Ein indirekt proportionaler Zusammenhang zwischen der Position oder Positionsänderung 65a-c bzw. dem Phasenversatz 67a-c und dem Sensorausgangssignal kann bspw. eine Division durch einen konstanten Wert oder durch eine Funktion, wie etwa einen quadratischen Wert eines variablen, von dem Phasenversatz abhängigen Wertes sein. Ferner kann es sich um eine Multiplikation mit einer trigonometrischen Funktion, wie etwa einer Cosinusfunktion in einem Winkelbereich von 0° bis 180° oder um eine direkt proportionale Funktion mit vertauschtem Vorzeichen handeln, sodass ein steigender Phasenversatz zu einem sinkenden Sensorausgangssignal führt.

Ein kontinuierlicher und möglicherweise abschnittsweise linearer Phasengang kann eine ausreichende Positionsauflösung für die Bestimmung der Position oder der Positionsänderung des Kopplungselementes aufweisen.

Die obigen Aussagen zu trigonometrischen Funktionen sind hierbei exemplarisch zu verstehen. Gemäß den Additionstheoremen können die Sinus- und Cosinusfunktionen in einander sowie in weitere trigonometrische Funktionen, wie etwa in eine Tangens-, Kotangens oder eine Arcussinusfunktion umgerechnet werden. Alternativ können die trigonometrischen Funktionen auch andere Funktionen sein oder in einem anderen Winkelbereich angewendet werden.

Ein Phasenversatz 67d kann bspw. einer Mittenposition des Kopplungselementes in der entsprechenden Sensoranordnung entsprechen, wie sie bspw. als Mittenposition 59 in der Fig. 7 dargestellt ist. Der Bereich 66 kann bspw. den Gesamtmessbereich der Sensoranordnung darstellen.

Der erste Phasenversatz 67a ist um mehr als 25 % des Gesamtmessbereichs von der Mittenposition 67d bzw. 59 des Gesamtmessbereichs zu kleineren Phasenverschiebungen versetzt.

Der dritte Phasenversatz 67c ist um mehr als 25 % des Gesamtmessbereichs von der Mittenposition 67d bzw. 59 des Gesamtmessbereichs zu größeren Phasenverschiebungen versetzt.

In anderen Worten wird die Phasenverschiebung über große Teile oder den gesamten erfassbaren Verfahrweg des Kopplungselementes, d. h. des Gesamtmessbereichs, für die Bestimmung der Position oder der Positionsänderung genutzt.

In andern Worten ist der Phasengang zwischen dem Ausgangssignal 22a und dem Ausgangssignal 22b vollständig unbeeinflusst von vorhandenen permanent- und ferromagnetischen Materialen. In anderen Worten ist eine Richtungserkennung basierend auf der Linearität des Phasengangs 62 mit geringen oder keinem Aufwand möglich. Im Nulldurchgang des Kopplungselementes kann der Phasengang linear sein, sodass Nicht-Linearitäten und daraus resultierende Effekte vermieden werden können. Eine Richtungserkennung für die Bewegung des Kerns, d.h. des Kopplungselementes, ist in der Auswerteschaltung bereits inhärent enthalten, wie es durch die Messkurven dargestellt ist.

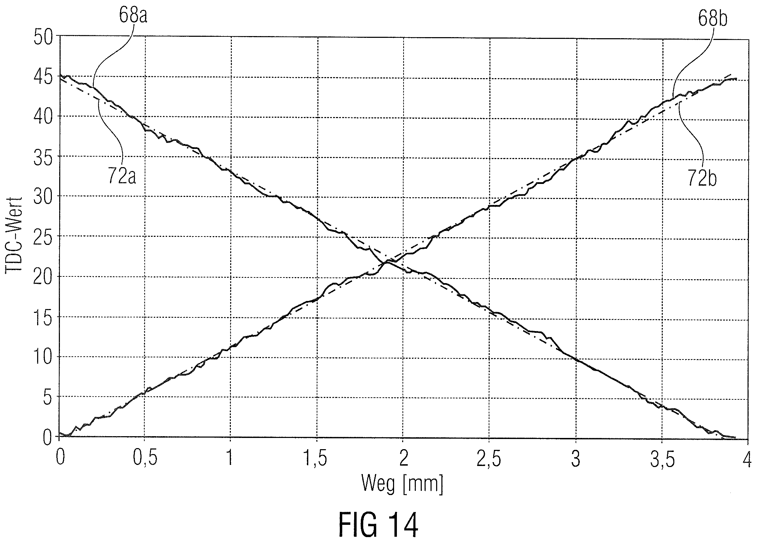

Fig. 14 zeigt ein Messwertdiagramm für eine Sensoranordnung, bei der ein LVDT um eine Pumpkammer in Abwesenheit von magnetischen Elementen angeordnet ist, über einen Verfahrweg in einem Bereich von 0-4 mm, wie es beispielsweise mit einem Setup 100 aufgenommen werden kann. Auf einer Abszisse des Graphen ist ein Verfahrweg des Kopplungselementes bspw. dem Pumpkolben aufgetragen, der bei einem Verfahrweg von ca. 1,8 mm eine Mittelstellung aufweist. An einer Ordinate des Graphen sind beispielhafte Messwerte, wie sie aus dem Zeit-zu-Digital-Konverter ausgegeben werden können, dargestellt. Eine Messkurve 68a zeigt die Zeit-zu-Digital-Werte, die bei einer Positionsänderung des Kopplungselementes mit einer Verfahrgeschwindigkeit von 30 mm/min ausgegeben werden können. Eine Messkurve 68b zeigt die korrespondierenden möglichen Werte bei einem Rückweg, d.h. einer Bewegung des Kopplungselementes in eine zur Messkurve 68a entgegengesetzten Richtung, ebenfalls mit einer Verfahrgeschwindigkeit von 30 mm/min. Eine Idealkurve 72a zeigt eine Linearisierung, d.h. Sollwerte, für die Messkurve 68a. Eine Sollkurve 72b zeigt Sollwerte für die Messkurve 68b.

Eine Phasenauswertung der Ausgangssignale der Sekundärspulen kann eine hohe, d.h. gute, Linearität mit einer geringen Abweichung zwischen der Messwertkurve 68a bzw. 68b und der Sollwertkurve 72a bzw. 72b aufweisen. Eine Auflösung des Stellweges kann in einem Bereich von kleiner 3, kleiner 2 oder kleiner 1 μm liegen.

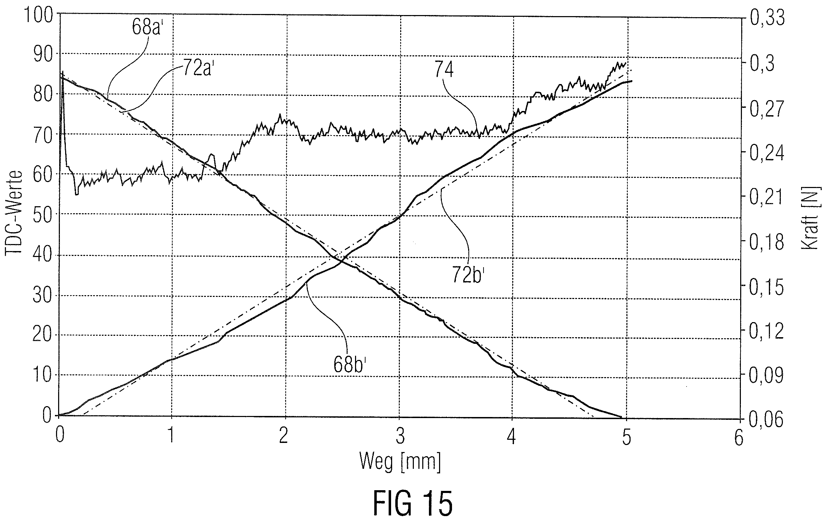

Fig. 15 zeigt eine Darstellung von Messergebnissen an einem Messaufbau analog zu den Ergebnissen in Fig. 14, bei der in einer Umgebung des Sensors ein Elektromagnet angeordnet ist. Die Messung erfolgt dabei derart, dass der Sensor in einem elektromagnetischen und als Joch ausgeformten Antrieb angeordnet ist. Eine Messwertkurve 68a' zeigt die Zeit-zu-Digital-Werte bei einem Verfahrweg zwischen 0 und 5 mm mit einer Verfahrgeschwindigkeit von 30 mm pro Minute. Der Verfahrweg, also die Positionsänderung des Kopplungselementes, bspw. des Pumpkolbens, ist dabei an einer Messwertkurve 68b' aufgetragen, die die Zeit-zu-Digital-Werte bei einer Rückbewegung des Kopplungselementes mit einer Verfahrgeschwindigkeit von 100 mm pro Minute anzeigt. Eine Kraftkurve 74 zeigt zur Plausibilitätsprüfungen eine Kraft einer Antriebseinrichtung, die das Kopplungselement bewegt. Die Sollwertkurven 72a' und 72b' zeigen die Linearisierung der Messwertkurven 68a' bzw. 68b'. Die Nicht-Linearitäten können beispielsweise durch Reibung des Kopplungselementes in der Pumpkammer zumindest teilweise verursacht sein.

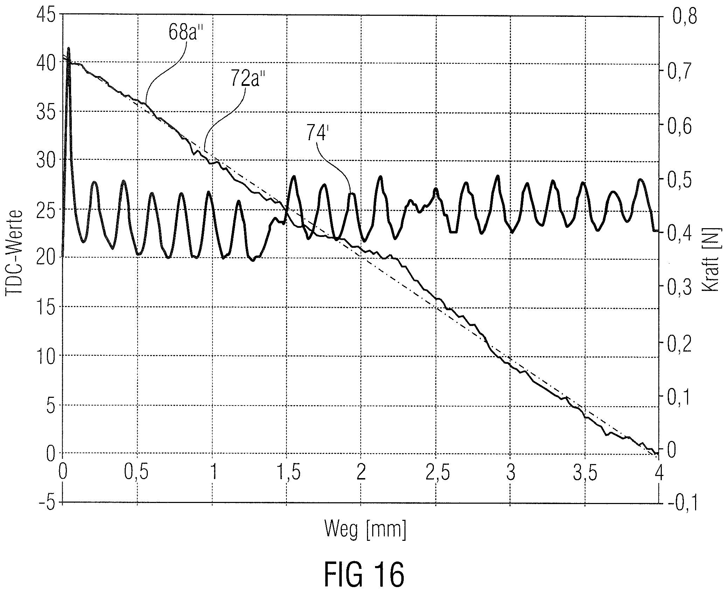

Fig. 16 zeigt eine Messwertkurve 68a" und eine korrespondiere Sollwertkurve bzw. -gerade 72a"eines Messaufbaus, wie er beispielsweise in Fig. 14 verwendet wird, bei einer Anwesenheit eines Permanentmagneten. Die Abweichungen der Messwertkurve 68a" zu der Sollwertkurve 72a" sind gering. Eine Kraftkurve 74' zeigt auch hier eine Korrelation der Reibung des Kopplungselementes in der Pumpkammer auf die Kennlinie des Sensors. Das bedeutet, dass das Vorhandensein eines magnetischen Feldes, wie es durch den Permanentmagneten generiert wird, eine Zuverlässigkeit der Messergebnisse unbeeinträchtigt lässt.

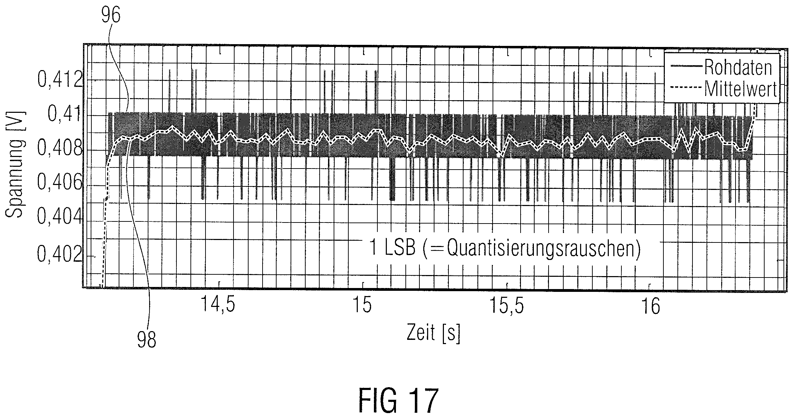

Fig. 17 zeigt eine Sensor-Kennlinie, mit Messwerten die basierend auf einer Rauschmessung einer Auswerteelektronik, wie sie beispielsweise in der Fig. 12 dargestellt ist, erfasst werden können. Eine Abszisse des Graphen zeigt eine Zeit in Sekunden, eine Ordinate des Graphen zeigt eine gemessene Spannung in Volt. Eine Messkurve 96 zeigt die erfassten Rohdaten, wohingegen die Messkurve 98 einen jeweiligen Mittelwert der Messwerte an einem Abszissenwert zeigt. Das erfasste Rauschen liegt dabei im Bereich von 2 mV, was einer Quantisierung bzw. einem Quantisierungsrauschen eines 12 Bit AD-Wandlers entsprechen kann, wenn bspw. eine Ausgangsspannung eine Dynamik von 10 Volt aufweist und 12 Bit in 4.096 diskrete Werte mit einer Schrittweite von je ca. 2,4 mV überführt sind. Eine Weg-Auflösung eines solchen LVDT-Sensors kann beispielsweise bei 2 μm liegen, wenn ein 12 Bit AD-Wandler eingesetzt wird (4 mm Gesamtverfahrweg bei 4.096 Schritten). Der Wert von 2 μm bezeichnet lediglich ein Ergebnis eines experimentellen Setups. Prinzipiell kann die Weg-Auflösung abhängig von einer Primär- und/oder Sekundärspulenanordnung, eines zu messenden Weges, einer Realisierung der Auswerteschaltung bzw. Auswerteeinrichtung auch andere Werte aufweisen.

Fig. 18a zeigt exemplarische und idealisierte Messergebnisse eines klassischen LVDT mit einer Signalamplitudenauswertung mit einer Zweiweg-Gleichrichtung in deren Darstellung die für die Zweiweg-Gleichrichtung typische V-Form ersichtlich ist. Bei der Zweiweg-Gleichrichtung sind die beiden Sekundärspulen gegensinnig verschaltet. Im Bereich des Nulldurchgangs des Kopplungselementes, d.h. im Bereich des Minimums der Messkurve 102, die einen Spannungswert der Zweiweg-Gleichrichtung angibt, weist eine derartige Auswertung eine geringe Sensitivität sowie einen Offset auf, d.h. der Signalwert der Messkurve 102 ist im Nulldurchgang des Kopplungselementes ungleich 0. Eine Ausgangsspannung, d.h. ein Ordinatenwert der Messkurve 102 ist mehrdeutig, da sie von dem Nulldurchgang ausgehend eine Bewegung in eine positive und eine negative Richtung anzeigen kann.

Fig. 18b zeigt eine mögliche Abhilfe der Mehrdeutigkeit aus Fig. 18a anhand einer Messkurve 102', wie sie beispielsweise bei einer separaten Zweiweg-Gleichrichtung einer Amplitudenauswertung erhalten werden kann.

Jedes Sekundärsignal wird bei der Zweiweg-Gleichrichtung zunächst einzeln demoduliert, bevor eine Differenz gebildet wird. So kann zwar eine Richtungserkennung implementiert werden. Jedoch bleiben Nachteile, wie sie beispielsweise durch eine Beeinflussung der Amplitudenwerte durch ein externes Magnetfeld entstehen können, bestehen.

Fig. 18c zeigt die Messkurve 102 aus Fig. 18a und eine zusätzliche Auswertung der Phase mittels Phasenkomparators. Eine Richtungserkennung kann durch eine zusätzliche Phasenauswertung derart erfolgen, dass, abhängig von einer Position abseits des Nulldurchgangs ein Phasenwert erhaltbar ist, der bei einer linearen Bewegungsrichtung des Kopplungselementes eine Position auf der einen oder der anderen Seite von dem Nulldurchgang anzeigt. Der Phasensprung zwischen den beiden Phasenwerten erfolgt relativ abrupt in einem kleinen Bereich um den Nulldurchgang herum und ist nur in diesem relativ kleinen Bereich näherungsweise linear. Dies wird auch als Zweiweg-Gleichrichtung mit Phasendetektor bezeichnet und ist beispielsweise in einer ApplicationNote mit der Bezeichnung DN362 der Firma Linear Technologie beschrieben.

In anderen Worten wird das Phasensignal hier lediglich als Fallunterscheidung genutzt, um zu bestimmen, ob ein erhaltenes Amplitudensignal der linken oder rechten Flanke der Amplitudenkurve zuzuordnen ist. Eine Bestimmung der (möglichen) Position findet aus dem Amplitudensignal heraus statt, welches außerhalb des Minimums der Messkurve 102 zwei mögliche Positionen liefert, zwischen denen basierend auf dem Phasenwert selektiert wird. Die Messkurve 102 ist ferner von äußeren Störeinflüssen, wie etwa Magnetfeldern beeinflussbar, wie es in der Fig. 13 dargestellt ist, sodass basierend auf der Amplitudenauswertung zwei fehlerhafte mögliche Positionen für die Fallunterscheidung basierend auf dem Phasenwert bereitgestellt werden können, etwa wenn äußere Magnetfelder die Messergebnisse beeinflussen.

Der Offset der Messkurve 102 kann zumindest teilweise durch Flussverluste im LVDT erklärt werden. Eine Verursachung des Offsets durch den Auswerteschaltkreis wird im allgemeinen verneint, sodass eine Optimierung der Auswerteschaltung möglicherweise lediglich unzureichende Verbesserungen zeigt.

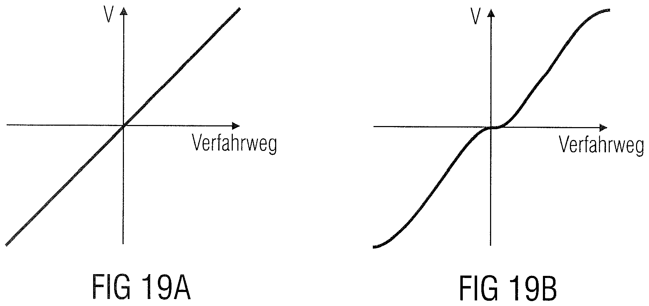

Die Fig. 19a und 19b zeigen weitere Eigenschaften einer klassischen Signalauswertung. Fig. 19a zeigt eine ideale, d.h. gewünschte, Signal/Verschiebungskurve, mit Signalwerten, die basierend auf einer separaten Zweiweg-Gleichrichtung eine Position des Kopplungselementes anzeigen.

Fig. 19b zeigt eine reelle, übertrieben dargestellte und nichtlineare Ausgangskurve, wie sie beispielsweise in der Applikationsschrift SPRA 946 der Firma Texas Instruments beschrieben ist. An Randbereichen der Kennlinie, d.h. bei minimaler und/oder maximaler Auslenkung weist die Kennlinie Nicht-Linearitäten auf. Ferner weist die Kurve im Bereich des Nulldurchgangs nachteilige Nicht-Linearitäten auf. Gründe für die Dämpfung in der Nähe der Maxima der Kernverschiebung, d.h. der Verschiebung des Kopplungselementes, können durch eine Konstruktionsweise des Wandlers bedingt sein. Ferner können Phaseneffekte zu den Nicht-Linearitäten führen, wohingegen die Nicht-Linearität in der Nähe des Nulldurchgangs der Effekt des Restsignals, d. h. Offsets, am Nullpunkt des Wandlers ist. In einem rein analogen System sind beide Effekte schwierig bis sehr schwierig zu korrigieren.

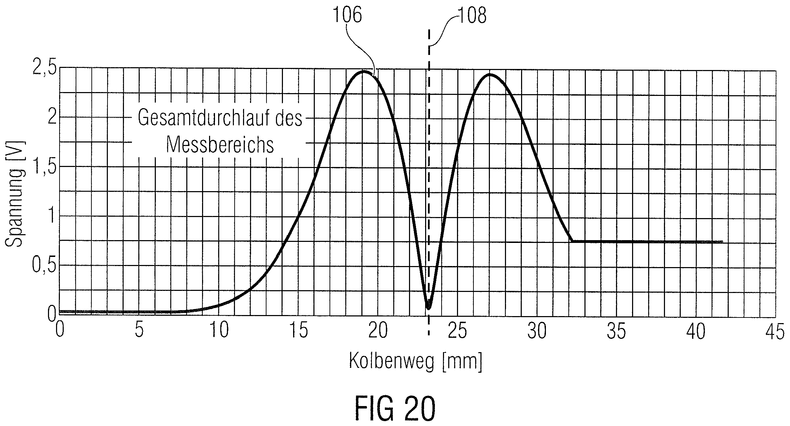

Fig. 20 zeigt eine Graphik mit zwei Messkurven, bei der ein LVDT-Sensor, ohne Anwesenheit eines Störkörper, wie etwa ferromagnetisches und/oder permanentmagnetisches Material und/oder magnetische Felder, mit einer Amplitudenauswertung einen Kolbenweg anzeigt. Die Messkurve 106 zeigt sowohl Rohdaten, als auch jeweilige Mittelwerte, wobei die Mittelwerte von den Rohdaten verdeckt sind. In anderen Worten zeigt die Messkurve 106 eine gemessene Kennlinie mit klassischer Signalauswertung, d.h. Amplitudenauswertung. Erkennbar ist eine nahezu symmetrische Ausgangsspannung bei einem Verfahren des Kolbens aus einer Nulllage 108 heraus in einen Bereich eines niedrigeren Kolbenweges oder eines höheren Kolbenweges. Um die Nullposition 108 herum zeigt die Messkurve 106 die typische V-Form, wie sie beispielsweise idealisiert in der Fig. 18a gezeigt ist. Nach Erreichen eines jeweiligen Maximums von beispielsweise 2,5 V fällt die Ausgangsspannung kontinuierlich mit steigendem Weg zwischen Nulldurchgang und aktueller Kolbenposition ab. Ein Verlauf der Ausgangsspannung bei nahezu 0,75 V ist in der begrenzten Verfahrmöglichkeit des Kolbens in dem zugrundeliegenden Setup begründet. In anderen Worten zeigt Fig. 119 einen Gesamtdurchlauf des Messbereichs des Kolbens über den Kolbenweg.

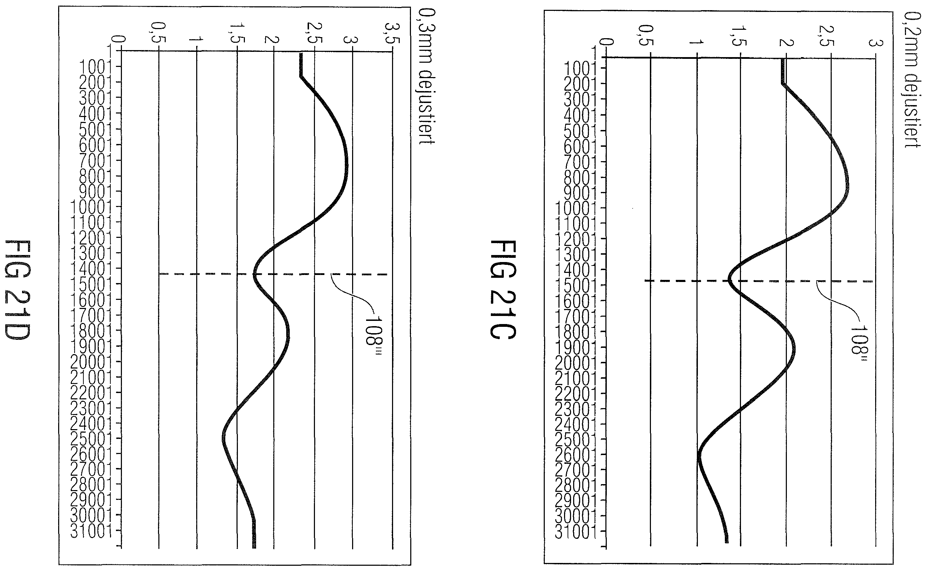

Die Fig. 21a, 21b, 21c und 21d zeigen qualitativ Einflüsse eines überlagernden Magnetfeldes auf eine Amplitudenauswertung, die durch eine Dejustage des, das Magnetfeld verursachenden Störkörpers, wie etwa ein ein Magnetfeld erzeugender Permanentmagnet, aus der Nulllage gemessen worden ist. Fig. 21a zeigt eine unbeeinflusste Messkurve, wie sie in ähnlicher Form beispielhaft in Fig. 20 dargestellt ist.

Fig. 21b zeigt die resultierende Kurve der Amplitudenauswertung bei einer Dejustage des Störkörpers um 0,1 mm. Links und rechts von einem dejustierten Nulldurchgang 108' werden die Signalamplituden asymmetrisch, d.h. die jeweiligen lokalen Maximal weisen eine voneinander verschiedene Amplitude auf.

Fig. 21c zeigt ein exemplarisches Messergebnis, bei der der Störkörper gegenüber Fig. 21 a um 0,2 mm dejustiert ist. Gegenüber Fig. 21b sind die beiden Asymmetrien der Abschnitte links und rechts von einem dejustierten Nulldurchgang 108" weiter erhöht.

Fig. 21d zeigt ein exemplarisches Messergebnis, bei der der Störkörper gegenüber Fig. 21a um 0,3 mm dejustiert ist, was zu einer weiter erhöhten Asymmetrie der lokalen Maxima der Messergebnisse um den dejustierten Nulldurchgang 108'" führt.

An ein symmetrisch justiertes System, d.h. des Störkörpers, wie es beispielsweise in Fig. 21a dargestellt ist, angelegte Magnetfelder können zu Beeinflussungen der Messergebnisse analog einer Dejustage des Störkörpers führen wie sie in den Fig. 21b, 21c und 21d beispielhaft dargestellt sind. In anderen Worten kann eine Dejustage eines Störkörpers zu gleichen oder ähnlichen Effekten wie störende Magnetfelder führen. Ein Amplitudengang kann bei Anwesenheit starker Magnetfelder beispielsweise durch Spulen und/oder Magnete oder bei ferromagnetischen Materialien verzerrt sein und möglicherweise für eine Positionsbestimmung des Kopplungselementes nachteilig sein oder die Messung unbrauchbar machen.

Obwohl in vorangegangenen Ausführungsbeispielen die Primärspule und die Sekundärspulen als planare und auf einem Substrat angeordnete Spulen dargestellt wurden, können die Primär- und/oder die Sekundärspulen oder eine Sekundärspule eine beliebige Spulenform, wie etwa eine Luftspule, Wickelspulen mit und ohne Ferritkern oder beispielsweise als eine Drossel, wie etwa eine Ringkerndrossel, eine Stabkerndrossel, eine Luftkerndrossel ausgeführt sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst sind, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Sensor (10; 20; 30; 40; 60) mit folgenden Merkmalen:

einer Primärspule (12);
zwei Sekundärspulen (14a; 14b);
wobei an der Primärspule (12) ein Erregersignal (18) anlegbar ist und in jeder Sekundärspule (14a; 14b) ein von einer Position eines Kopplungselementes (16) abhängiges Ausgangssignal (22a; 22b) induzierbar ist; und einer Auswerteeinrichtung (26; 26-1; 26-2; 26-3) zum Auswerten der Ausgangssignale (22a; 22b) der Sekundärspulen (14a; 14b), wobei die Auswerteeinrichtung (26; 26-1; 26-2; 26-3) ausgebildet ist, um einen Phasenversatz zwischen den Ausgangssignalen (22a; 22b) auszuwerten, und um ein Sensorausgangssignal (28) proportional zu dem Phasenversatz zu liefern, das die Position oder eine Positionsänderung des Kopplungselementes (16) anzeigt.

**2.** Sensor (10; 20; 30; 40; 60) gemäß Anspruch 1, bei dem die Auswerteeinrichtung (26; 26-1; 26-2; 26-3) ausgebildet ist, um bei einem ersten Phasenversatz (67a) ein erstes Sensorausgangssignal zu liefern, das eine erste Position oder Positionsänderung (65a) des Kopplungselementes (16) darstellt;

bei der die Auswerteeinrichtung (26; 26-1; 26-2; 26-3) ausgebildet ist, um bei einem zweiten Phasenversatz (67b) ein zweites Sensorausgangssignal zu liefern, das eine zweite Position oder Positionsänderung (65b) des Kopplungselementes (16) darstellt;

bei der die Auswerteeinrichtung (26; 26-1; 26-2; 26-3) ausgebildet ist, um bei einem dritten Phasenversatz (67c) ein drittes Sensorausgangssignal zu liefern, das eine dritte Position oder Positionsänderung (65c) des Kopplungselementes (16) darstellt;

wobei im Falle eines direkt proportionalen Sensorausgangssignals (28) der dritte Phasenversatz (67c) größer als der zweite Phasenversatz (67b) ist und die dritte Position oder Positionsänderung (65c) größer ist als die zweite Position oder Positionsänderung (65b) und der zweite Phasenversatz (67b) größer als der erste Phasenversatz (67a) ist und die zweite Position oder Positionsänderung (65b) größer ist als die erste Position oder Positionsänderung (65a); oder

wobei im Falle eines indirekt proportionalen Sensorausgangssignals (28) der dritte Phasenversatz (67c) größer als der zweite Phasenversatz (67b) ist und die dritte Position oder Positionsänderung (65c) kleiner ist als die zweite Position oder Positionsänderung (65b) und der zweite Phasenversatz (67b) größer als der erste Phasenversatz (67a) ist und die zweite Position oder Positionsänderung (65b) kleiner ist als die erste Position oder Positionsänderung (65a).

**3.** Sensor (10; 20; 30; 40; 60) gemäß Anspruch 2,

bei dem der erste Phasenversatz (67a), um mehr als 25 % eines Gesamtmessbereichs, von einer Mittenposition (67d) des Gesamtmessbereichs zu kleineren Phasenverschiebungen versetzt ist; oder

bei dem der dritte Phasenversatz (67c) um mehr als 25 % eines Gesamtmessbereichs, von einer Mittenposition (67d) des Gesamtmessbereichs zu größeren Phasenverschiebungen versetzt ist.

**4.** Sensor (10; 20; 30; 40; 60) gemäß Anspruch 3, bei der der Gesamtmessbereich wenigstens gleich einer Breite (15a; 15b) einer der Sekundärspulen (14a; 14b) in Richtung einer vorbestimmten Bewegungsrichtung (24) des Kopplungselementes (16) oder gleich einem kürzesten Abstand (63a+63b) zwischen den zwei Sekundärspulen (14a; 14b) ist.

**5.** Sensor (10; 20; 30; 40; 60) gemäß einem der vorangehenden Ansprüche, bei dem die Auswerteeinrichtung (26; 26-1; 26-2; 26-3) ausgebildet ist,

um das Ausgangssignal (22a) der ersten Sekundärspule (14a) mit einer Frequenz, die gleich der Frequenz des Erregersignals (18) ist, und das Ausgangssignal (22b) der zweiten Sekundärspule (14b) mit einer Frequenz, die gleich der Frequenz des Erregersignals (18) ist, zu erhalten;

um das erste Ausgangssignal (22a) und das zweite Ausgangssignal (22b) so zu verarbeiten, dass basierend auf einem Zeitversatz zwischen einem Merkmal des ersten Ausgangssignals (22a) und einem Merkmal des zweiten Ausgangssignals (22b) das Sensorausgangssignal (28) bestimmt wird.

**6.** Sensor (10; 20; 30; 40; 60) gemäß einem der vorangehenden Ansprüche, bei dem die Auswerteeinrichtung (26; 26-1; 26-2; 26-3) ferner ausgebildet ist, um einen zeitlichen Versatz zwischen zumindest einem Ausgangssignal (22a; 22b) einer der Sekundärspulen (14a; 14b) und dem Erregersignal (18) zu bestimmen, um einen Offsetkorrekturwert (56) zu liefern.

**7.** Sensor (10; 20; 30; 40; 60) gemäß einem der vorangehenden Ansprüche, bei der die Auswerteeinrichtung (26; 26-1; 26-2; 26-3) ferner einen Zeit-zu-Digital-Konverter (34) aufweist, der ausgebildet ist, um das Ausgangssignal (22a) der ersten Sekundärspule (14a) mit einer Frequenz, die gleich der Frequenz des Erregersignals (18) ist, und das Ausgangssignal (22b) der zweiten Sekundärspule (14b) mit einer Frequenz, die gleich der Frequenz des Erregersignals ist, zu erhalten; um einen Zeitversatz zwischen einem Auftreten eines Merkmals in den zwei Ausgangssignalen (22a; 22b) zu messen; und um einen digitalen Wert auszugeben, der die gemessene Zeit anzeigt, wobei die gemessene Zeit mit dem Phasenversatz korreliert.

**8.** Sensor (10; 20; 30; 40; 60) gemäß einem der Ansprüche 1-6, bei dem die Auswerteeinrichtung (26; 26-1; 26-2; 26-3) ferner einen Phasendetektor (38) und einen Quotientenbestimmer (42) aufweist;

wobei der Phasendetektor (38) ausgebildet ist, um das Ausgangssignal (22a) der ersten Sekundärspule (14a) mit einer Frequenz, die gleich der Frequenz des Erregersignals (18) ist, und das Ausgangssignal (22b) der zweiten Sekundärspule (14b) mit einer Frequenz, die gleich der Frequenz des Erregersignals (18) Ist, zu erhalten, und um den Zeitversatz basierend auf einem Multiplikationsvorgang der beiden Ausgangssignale (22a; 22b) zu bestimmen; und

wobei der Quotientenbestimmer (42) ausgebildet ist, um einen Quotienten zwischen dem Ausgangssignal (22a) der ersten Sekundärspule (14a) und dem Ausgangssignal (22b) der zweiten Sekundärspule (14b) zu bestimmen, um ein Amplitudenverhältnissignal (44) zu liefern.

9.  Sensor (10; 20; 30; 40; 60) gemäß einem der Ansprüche 1-6, bei dem die Auswerteeinrichtung (26; 26-1; 26-2; 26-3) ferner einen Signalumformer (46a; 46b) und einen Multiplizierer (48) aufweist;
    wobei der Signalumformer (46a; 46b) ausgebildet ist, um das Ausgangssignal (22a) der ersten Sekundärspule (14a) mit einer Frequenz, die gleich der Frequenz des Erregersignals (18) ist, und das Ausgangssignal (22b) der zweiten Sekundärspule (14b) mit einer Frequenz, die gleich der Frequenz des Erregersignals (18) ist, zu erhalten, um ein Merkmal des Ausgangssignals (22a) der ersten Sekundärspule (14a) und ein Merkmal des Ausgangssignals (22b) der zweiten Sekundärspule (14b) hervorzuheben, und um ein erstes umgeformtes Signal (52a) mit dem hervorgehobenen Merkmal des Ausgangssignals (22a) der ersten Sekundärspule (14a) und ein zweites umgeformtes Signal (52b) mit dem hervorgehobenen Merkmal des Ausgangssignals (22b) der zweiten Sekundärspule (14b) zu liefern; und
    wobei der Multiplizierer (48) ausgebildet ist, um ein Multiplikationssignal (54) basierend auf einer Multiplikation des ersten umgeformten Signals (52a) und des zweiten umgeformten Signals (52b) zu liefern, sodass ein Gleichanteil des Multiplikationssignals (54) den Zeitversatz angibt.

10. Sensor (10; 20; 30; 40; 60) gemäß einem der Ansprüche 1-6, bei dem die Auswerteeinrichtung (26; 26-1; 26-2; 26-3) ausgebildet ist, um eine Phase des ersten Ausgangssignals (22a) und eine Phase des zweiten Ausgangssignals (22b) zu bestimmen und den Phasenversatz basierend auf einer Differenz zwischen den Phasen zu bestimmen.

11. Sensor (10; 20; 30; 40; 60) gemäß einem der vorangegangenen Ansprüche, der
    ein Substrat (58) aufweist;
    bei dem die beiden Sekundärspulen (14a; 14b) und die Primärspule (12) auf dem Substrat (58) angeordnet sind;
    bei dem die Sekundärspulen (14a; 14b) und die Primärspulen (12) Planarspulen sind; und
    bei dem Anschlüsse für die Sekundärspulen (14a; 14b) und die Primärspule (12) ebenfalls auf dem Substrat (58) angeordnet sind.

12. Sensor gemäß Anspruch 11, bei dem die Primärspule (12) so bezüglich der beiden Sekundärspulen (14a; 14b) angeordnet ist, dass Windungen der Primärspule (12) Windungen der Sekundärspulen (14a; 14b) umschließen.

13. Sensor (10; 20; 30; 40; 60) gemäß Anspruch 11 oder 12,
    bei dem das Substrat (58) ein flexibles Substrat ist, und bei dem das flexible Substrat zu einer dreidimensionalen Anordnung geformt ist, wobei eine Oberfläche der dreidimensionalen Anordnung, die die beiden Sekundärspulen (14a; 14b) und zumindest einen Teil der Primärspule (12) aufweist, nicht planar ist und an eine nicht planare Oberfläche des Kopplungselementes (16) angepasst ist.

14. Sensor (10; 20; 30; 40; 60) gemäß einem der vorangegangenen Ansprüche, bei dem das Kopplungselement (16) ein metallisches oder ferromagnetisches Material umfasst.

15. Sensor (10; 20; 30; 40; 60) gemäß einem der vorangegangenen Ansprüche, bei dem die Primärspule (12) eine Induktivität von kleinergleich 500 mH oder eine Sekundärspule (14a; 14b) eine Induktivität von kleinergleich 500 mH aufweist.

16. Sensor (10; 20; 30; 40; 60) gemäß einem der vorangegangenen Ansprüche, bei dem eine Seite einer ersten Sekundärspule (14a) und eine Seite einer zweiten Sekundärspule (14b) mit einem gleichen elektrischen Potenzial verbunden sind.

17. Vorrichtung (210), die einen Sensor gemäß einem der Ansprüche 1-16 aufweist und die ferner ein bewegliches Element aufweist, das mit dem Kopplungselement derart verbunden ist, dass eine Position des Kopplungselementes von einer Position des beweglichen Elementes beeinflusst wird.

18. Verfahren zum Betreiben eines Sensors mit einer Primärspule, zwei Sekundärspulen und einem Kopplungselement mit folgenden Schritten:

Anlegen eines Erregersignals an der Primärspule und induzieren eines von einer Position des Kopplungselementes abhängiges Ausgangssignals in jeder Sekundärspule; und

Auswerten der Ausgangssignale der Sekundärspulen, basierend auf einem Phasenversatz zwischen den Ausgangssignalen, und Liefern eines Sensorausgangssignals, das die Position oder eine Positionsänderung des Kopplungselementes anzeigt.

19. Computerprogramm mit einem Programmcode zur Durchführung des Verfahrens nach Anspruch 18, wenn das Programm auf einem Computer läuft.

**Claims**

1. Sensor (10; 20; 30; 40; 60), comprising:

a primary coil (12);
two secondary coils (14a; 14b);
wherein an excitation signal (18) may be applied to the primary coil (12) and an output signal (22a; 22b) depending on a position of a coupling element (16) may be induced in each secondary coil (14a; 14b); and
an evaluating means (26; 26-1; 26-2; 26-3) for evaluating the output signals (22a; 22b) of the secondary coils (14a; 14b), wherein the evaluating means (26; 26-1; 26-2; 26-3) is configured to evaluate a phase offset between the output signals (22a; 22b), and to provide a sensor output signal (28) proportional to the phase offset indicating the position or a change in position of the coupling element (16).

2. Sensor (10; 20; 30; 40; 60) according to claim 1, wherein the evaluating means (26; 26-1; 26-2; 26-3) is configured to provide, at a first phase offset (67a), a first sensor output signal representing a first position or change in position (65a) of the coupling element (16);
wherein the evaluating means (26; 26-1; 26-2; 26-3) is configured to provide, at a second phase offset (67b), a second sensor output signal representing a second position or change in position (65b) of the coupling element (16);
wherein the evaluating means (26; 26-1; 26-2; 26-3) is configured to provide, at a third phase offset (67c), a third sensor output signal representing a third position or change in position (65c) of the coupling element (16);
wherein in the case of a directly proportional sensor output signal (28), the third phase offset (67c) is greater than the second phase offset (67b), and the third position or change in position (65c) is greater than the second position or change in position (65b), and the second phase offset (67b) is greater than the first phase offset (67a), and the second position or change in position (65b) is greater than the first position or change in position (65a); or
wherein in the case of an indirectly proportional sensor output signal (28), the third phase offset (67c) is greater than the second phase offset (67b), and the third positon or change in position (65c) is smaller than the second position or change in position (65b), and the second phase offset (67b) is greater than the first phase offset (67a), and the second position or change in position (65b) is smaller than the first position or change in position (65a).

3. Sensor (10; 20; 30; 40; 60) according to claim 2,
wherein the first phase offset (67a) is offset by more than 25% of an overall measurement range from a center position (67c) of the overall measurement range to smaller phase shifts; or
wherein the third phase offset (67c) is offset by more than 25% of an overall measurement range from a center position (67d) of the overall measurement range to greater phase shifts.

4. Sensor (10; 20: 30: 40; 60) according to claim 3, wherein the overall measurement range is at least equal to a width (15a; 15b) of one of the secondary coils (14a; 14b) in the direction of a predetermined direction of movement (24) of the coupling element (16) or equal to a shortest distance (63a+63b) between the two secondary coils (14a; 14b).

5. Sensor (10; 20; 30; 40; 60) according to one of the previous claims, wherein the evaluating means (26; 26-1; 26-2; 26-3) is implemented
to obtain the output signal (22a) of the first secondary coil (14a) at a frequency that is equal to the frequency of the excitation signal (18), and the output signal (22b) of the second secondary coil (14b) at a frequency that is equal to the frequency of the excitation signal (18);
to process the first output signal (22a) and the second output signal (22b) such that based on a time offset between a feature of the first output signal (22a) and a feature of the second output signal (22b) the sensor output signal (28) is determined.

**6.** Sensor (10; 20; 30; 40; 60) according to one of the previous claims, wherein the evaluating means (26; 26-1; 26-2; 26-3) is further configured to determine a time offset between at least one output signal (22a; 22b) of one of the secondary coils (14a; 14b) and the excitation signal (18) to provide an offset correction value (56).

**7.** Sensor (10; 20; 30; 40; 60) according to one of the previous claims, wherein the evaluating means (26; 26-1; 26-2; 26-3) further comprises a time-to-digital converter (34) that is configured to obtain the output signal (22a) of the first secondary coil (14a) at a frequency that is equal to the frequency of the excitation signal (18), and the output signal (22b) of the second secondary coil (14b) at a frequency that is equal to the frequency of the excitation signal; to measure a time offset between an occurrence of a feature in the two output signals (22a; 22b), and to output a digital value indicating the measured time, wherein the measured time correlates with the phase offset.

**8.** Sensor (10; 20; 30; 40; 60) according to one of claims 1 to 6, wherein the evaluating means (26; 26-1; 26-2; 26-3) further comprises a phase detector (38) and a quotient determiner (42),
wherein the phase detector (38) is configured to obtain the output signal (22a) of the first secondary coil (14a) at a frequency that is equal to the frequency of the excitation signal (18), and the output signal (22b) of the second secondary coil (14b) at a frequency that is equal to the frequency of the excitation signal (18), and to determine the time offset based on a multiplication process of the two output signals (22a; 22b); and
wherein the quotient determiner (42) is configured to determine a quotient between the output signal (22a) of the first secondary coil (14a) and the output signal (22b) of the second secondary coil (14b) to provide an amplitude ratio signal (44).

**9.** Sensor (10; 20; 30; 40; 60) according to one of claims 1 to 6, wherein the evaluating means (26; 26-1; 26-2; 26-3) further comprises a signal transducer (46a; 46b) and a multiplier (48);
wherein the signal transducer (46a; 46b) is configured to obtain the output signal (22a) of the first secondary coil (14a) at a frequency that is equal to the frequency of the excitation signal (18), and the output signal (22b) of the second secondary coil (14b) at a frequency that is equal to the frequency of the excitation signal (18), and to emphasize a feature of the output signal (22a) of the first secondary coil (14a) and a feature of the output signal (22b) of the second secondary coil (14b), and to provide a first transduced signal (52a) with the emphasized feature of the output signal (22a) of the first secondary coil (14a) and a second transduced signal (52b) with the emphasized feature of the output signal (22b) of the second secondary coil (14b); and
wherein the multiplier (48) is configured to provide a multiplication signal (54) based on a multiplication of the first transduced signal (52a) and the second converted signal (52b) such that a direct component of the multiplication signal (54) indicates the time offset.

**10.** Sensor (10; 20; 30; 40; 60) according to one of claims 1 to 6, wherein the evaluating means (26; 26-1; 26-2; 26-3) is configured to determine a phase of the first output signal (22a) and a phase of the second output signal (22b) and to determine the phase offset based on a difference between the phases.

**11.** Sensor (10; 20; 30; 40; 60) according to one of the previous claims, comprising
a substrate (58);
wherein the two secondary coils (14a; 14b) and the primary coil (12) are arranged on the substrate (58);
wherein the secondary coils (14a; 14b) and the primary coils (12) are planar coils; and
wherein terminals for the secondary coils (14a; 14b) and the primary coil (12) are also arranged on the substrate (58).

**12.** Sensor according to claim 11, wherein the primary coil (12) is arranged with respect to the two secondary coils (14a; 14b) such that turns of the primary coil (12) enclose turns of the secondary coils (14a; 14b).

**13.** Sensor (10; 20; 30; 40; 60) according to claim 11 or 12,
wherein the substrate (58) is a flexible substrate and wherein the flexible substrate is formed into a three-dimensional arrangement, wherein a surface of the three-dimensional arrangement comprising the two secondary coils (14a; 14b) and at least one part of the primary coil (12) is not planar and adapted to a non-planar surface of the coupling element (16).

**14.** Sensor (10; 20; 30; 40; 60) according to one of the previous claims, wherein the coupling element (16) comprises a metallic or ferromagnetic material.

**15.** Sensor (10; 20; 30; 40; 60) according to one of the previous claims, wherein the primary coil (12) comprises an inductance of equal to or less than 500 mH or a secondary coil (14a; 14b) comprises an inductance of equal to or less than 500 mH.

16. Sensor (10; 20; 30; 40; 60) according to one of the previous claims, wherein one side of a first secondary coil (14a) and one side of a second secondary coil (14b) are connected to the same electric potential.

17. Device (210) comprising a sensor according to one of claims 1 to 16 and further comprising a movable element connected to the coupling element such that a position of the coupling element is influenced by a position of the movable element.

18. Method for operating a sensor comprising a primary coil, two secondary coils and a coupling element, comprising:

applying an excitation signal to the primary coil and inducing an output signal depending on a position of the coupling element in each secondary coil; and
evaluating the output signals of the secondary coils based on a phase offset between the output signals, and providing a sensor output signal indicating the position or a change in position of the coupling element.

19. Computer program having a program code for performing a method according to claim 18 when the program runs on a computer.

**Revendications**

1. Capteur (10; 20; 30; 40; 60) aux caractéristiques suivantes:

une bobine primaire (12);
deux bobines secondaires (14a; 14b);
dans lequel peut être appliqué, à la bobine primaire (12), un signal d'excitation (18) et dans chaque bobine secondaire (14a; 14b) peut être induit un signal de sortie (22a; 22b) dépendant d'une position d'un élément de couplage (16); et
un moyen d'évaluation (26; 26-1; 26-2; 26-3) destiné à évaluer les signaux de sortie (22a; 22b) des bobines secondaires (14a; 14b), l'élément d'évaluation (26; 26-1; 26-2; 26-3) étant réalisé pour évaluer un déphasage entre les signaux de sortie (22a; 22b) et pour fournir un signal de sortie de capteur (28) proportionnel au signal de déphasage qui indique la position ou un changement de position de l'élément de couplage (16).

2. Capteur (10; 20; 30; 40; 60) selon la revendication 1, dans lequel le moyen d'évaluation (26; 26-1; 26-2; 26-3) est réalisé pour fournir, à un premier déphasage (67a), un premier signal de sortie de capteur qui représente une première position ou un premier changement de position (65a) de l'élément de couplage (16);
dans lequel le moyen d'évaluation (26; 26-1; 26-2; 26-3) est réalisé pour fournir, à un deuxième déphasage (67b), un deuxième signal de sortie de capteur qui représente une deuxième position ou un deuxième changement de position (65b) de l'élément de couplage (16);
dans lequel le moyen d'évaluation (26; 26-1; 26-2; 26-3) est réalisé pour fournir, à un troisième déphasage (67b), un troisième signal de sortie de capteur qui représente une troisième position ou un troisième changement de position (65b) de l'élément de couplage (16);
dans lequel, dans le cas d'un signal de sortie de capteur directement proportionnel (28), le troisième déphasage (67c) est supérieur au deuxième déphasage (67b) et la troisième position ou le troisième changement de position (65c) est supérieur à la deuxième position ou au deuxième changement de position (65b) et le deuxième déphasage (67b) est supérieur au premier déphasage (67a) et la deuxième position ou le deuxième changement de position (65b) est supérieur à la première position ou au premier changement de position (65a); ou
dans lequel, dans le cas d'un signal de sortie du capteur (28) indirectement proportionnel, le troisième déphasage (67c) est supérieur au deuxième déphasage (67b), la troisième position ou le troisième changement de position (65c) est inférieur à la deuxième position ou au deuxième changement de position (65b) et le deuxième déphasage (67b) est supérieur au premier déphasage (67a) et la deuxième position ou le deuxième changement de position (65b) est inférieur à la première position ou au premier changement de position (65a).

3. Capteur (10; 20; 30; 40; 60) selon la revendication 2,
dans lequel le premier déphasage (67a) est décalé de plus de 25% d'une plage de mesure totale, d'une position centrale (67d) de la plage de mesure totale vers de petits déphasages; ou
dans lequel le troisième déphasage (67c) est décalé de plus de 25% d'une plage de mesure totale, d'une partie centrale (67d) de la plage de mesure totale vers de grands déphasages.

**4.** Capteur (10; 20; 30; 40; 60) selon la revendication 3, dans lequel la plage de mesure totale est au moins égale à une largeur (15a; 15b) de l'une des bobines secondaires (14a; 14b) en direction d'une direction de déplacement prédéterminée (24) de l'élément de couplage (16) ou égale à une distance la plus courte (63a+63b) entre les deux bobines secondaires (14a; 14b).

**5.** Capteur (10; 20; 30; 40; 60) selon l'une des revendications précédentes, dans lequel le moyen d'évaluation (26; 26-1; 26-2; 26-3) est réalisé
pour obtenir le signal de sortie (22a) de la première bobine secondaire (14a) avec une fréquence qui est égale à la fréquence du signal d'excitation (18) et le signal de sortie (22b) de la deuxième bobine secondaire (14b) avec une fréquence égale à la fréquence du signal d'excitation (18);
pour traiter le premier signal de sortie (22a) et le deuxième signal de sortie (22b) de sorte que sur base d'un décalage de temps entre une caractéristique du premier signal de sortie (22a) et une caractéristique du deuxième signal de sortie (22b) soit déterminé le signal de sortie de capteur (28).

**6.** Capteur (10; 20; 30; 40; 60) selon l'une des revendications précédentes, dans lequel le moyen d'évaluation (26; 26-1; 26-2; 26-3) est par ailleurs réalisé pour déterminer un décalage temporel entre au moins un signal de sortie (22a; 22b) de l'une des bobines secondaires (14a; 14b) et le signal d'excitation (18), pour fournir une valeur de correction de décalage (56).

**7.** Capteur (10; 20; 30; 40; 60) selon l'une des revendications précédentes, dans lequel le moyen d'évaluation (26; 26-1; 26-2; 26-3) présente par ailleurs un convertisseur temporel-numérique (34) qui est réalisé pour obtenir le signal de sortie (22a) de la première bobine secondaire (14a) avec une fréquence qui est égale à la fréquence du signal d'excitation (18) et le signal de sortie (22b) de la deuxième bobine secondaire (14b) avec une fréquence qui est égale à la fréquence du signal d'excitation; pour mesurer un décalage de temps entre une occurrence d'une caractéristique dans les deux signaux de sortie (22a; 22b); et pour une sortir une valeur numérique qui indique le temps mesuré, le temps mesuré étant corrélé avec le déphasage.

**8.** Capteur (10; 20; 30; 40; 60) selon l'une des revendications 1 à 6,
dans lequel le moyen d'évaluation (26; 26-1; 26-2; 26-3) présente par ailleurs un détecteur de phase (38) et un déterminateur de quotient (42);
dans lequel le détecteur de phase (38) est réalisé pour obtenir le signal de sortie (22a) de la première bobine secondaire (14a) avec une fréquence qui est égale à la fréquence du signal d'excitation (18) et le signal de sortie (22b) de la deuxième bobine secondaire (14b) avec une fréquence qui est égale à la fréquence du signal d'excitation (18), et pour déterminer le décalage de temps sur base d'une opération de multiplication des deux signaux de sortie (22a, 22b); et
dans lequel le déterminateur de quotient (42) est réalisé pour déterminer un quotient entre le signal de sortie (22a) de la première bobine secondaire (14a) et le signal de sortie (22b) de la deuxième bobine secondaire (14b) pour fournir un signal de rapport d'amplitude (44).

**9.** Capteur (10; 20; 30; 40; 60) selon l'une des revendications 1 à 6,
dans lequel le moyen d'évaluation (26; 26-1; 26-2; 26-3) présente par ailleurs un convertisseur de signal (46a, 46b) et un multiplicateur (48);
dans lequel le convertisseur de signal (46a, 46b) est réalisé pour obtenir le signal de sortie (22a) de la première bobine secondaire (14a) avec une fréquence qui est égale à la fréquence du signal d'excitation (18) et le signal de sortie (22b) de la deuxième bobine secondaire (14b) avec une fréquence qui est égale à la fréquence du signal d'excitation (18), pour mettre en évidence une caractéristique du signal de sortie (22a) de la première bobine secondaire (14a) et une caractéristique du signal de sortie (22b) de la deuxième bobine secondaire (14b), et pour fournir un premier signal converti (52a) avec la caractéristique mise en évidence du signal de sortie (22a) de la première bobine secondaire (14a) et un deuxième signal converti (52b) avec la caractéristique mise en évidence du signal de sortie (22b) de la deuxième bobine secondaire (14b); et
dans lequel le multiplicateur (48) est réalisé pour fournir un signal de multiplication (54) sur base d'une multiplication du premier signal converti (52a) et du deuxième signal converti (52b), de sorte qu'une composante continue du signal de multiplication (54) indique le décalage de temps.

**10.** Capteur (10; 20; 30; 40; 60) selon l'une des revendications 1 à 6,
dans lequel le moyen d'évaluation (26; 26-1; 26-2; 26-3) est réalisé pour déterminer une phase du premier signal de sortie (22a) et une phase du deuxième signal de sortie (22b) et pour déterminer le déphasage sur base d'une différence entre les phases.

**11.** Capteur (10; 20; 30; 40; 60) selon l'une des revendications précédentes, qui présente

un substrat (58);
dans lequel les deux bobines secondaires (14a; 14b) et la bobine primaire (12) sont disposées sur le substrat (58);
dans lequel les bobines secondaires (14a; 14b) et les bobines primaires (12) sont des bobines planes; et
dans lequel les connexions pour les bobines secondaires (14a; 14b) et la bobine primaire (12) sont également disposées sur le substrat (58).

**12.** Capteur selon la revendication 11, dans lequel la bobine primaire (12) est disposée par rapport aux deux bobines secondaires (14a; 14b) de sorte que les spires de la bobine primaire (12) entourent des spires des bobines secondaires (14a; 14b).

**13.** Capteur (10; 20; 30; 40; 60) selon la revendication 11 ou 12,
dans lequel le substrat (58) est un substrat flexible, et dans lequel le substrat flexible est formé pour obtenir un aménagement tridimensionnel, dans lequel une surface de l'aménagement tridimensionnel présentant les deux bobines secondaires (14a; 14b) et au moins une partie de la bobine primaire (12) n'est pas plane et est adaptée à une surface non plane de l'élément de couplage (16).

**14.** Capteur (10; 20; 30; 40; 60) selon l'une des revendications précédentes, dans lequel l'élément de couplage (16) comporte un matériau métallique ou ferromagnétique.

**15.** Capteur (10; 20; 30; 40; 60) selon l'une des revendications précédentes, dans lequel la bobine primaire (12) présente une inductance inférieure ou égale à 500 mH ou une bobine secondaire (14a; 14b) présente une inductance inférieure ou égale à 500 mH.

**16.** Capteur (10; 20; 30; 40; 60) selon l'une des revendications précédentes, dans lequel un côté d'une première bobine secondaire (14a) et un côté d'une deuxième bobine secondaire (14b) sont connectées à un même potentiel électrique.

**17.** Appareil (210) présentant un capteur selon l'une des revendications 1 à 16 et présentant par ailleurs un élément mobile qui est connecté à l'élément de couplage de sorte qu'une position de l'élément de couplage soit influencée par une position de l'élément mobile.

**18.** Procédé pour faire fonctionner un capteur avec une bobine primaire, deux bobines secondaires et un élément de couplage, aux étapes suivantes consistant à:

appliquer un signal d'excitation à la bobine primaire et induire un signal de sortie dépendant d'une position de l'élément de couplage dans chaque bobine secondaire; et
évaluer les signaux de sortie des bobines secondaires sur base d'un déphasage entre les signaux de sortie et fournir un signal de sortie de capteur qui indique la position ou un changement de position de l'élément de couplage.

**19.** Programme d'ordinateur avec un code de programme pour réaliser le procédé selon la revendication 18 lorsque le programme est exécuté sur un ordinateur.

FIG 1

Erregersignal

Phase

EP 2 833 100 B1

FIG 2

FIG 3

FIG 4

EP 2 833 100 B1

FIG 5

EP 2 833 100 B1

60

16  14a

18  12  14b  22a  26-4

22b

Phase

Phase

28

56

18

**FIG 6**

FIG 7

70    24    16

FIG 8

FIG 9

FIG 10A

EP 2 833 100 B1

FIG 10B

FIG 10C

92  94  70

FIG 11

FIG 12

FIG 13

Phasenversatz

Verfahrweg

Phasengang zwischen 22a & 22b } 62

Amplitudengang (22a–22b) } 64

67a
67b
67c
67d ≙ 59
65a
65b
65c
69a
69b
69c
66

EP 2 833 100 B1

FIG 14

FIG 15

EP 2 833 100 B1

FIG 16

FIG 17

FIG 18A

FIG 18B

FIG 18C

FIG 19B

FIG 19A

FIG 20

symmetrisch

**FIG 21A**

0,1mm dejustiert

**FIG 21B**

0,2mm dejustiert

FIG 21C

0,3mm dejustiert

FIG 21D

**EP 2 833 100 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6552666 B